(19) Europäisches Patentamt / European Patent Office / Office européen des brevets

(11) **EP 4 265 535 A1**

(12) **EUROPEAN PATENT APPLICATION**
published in accordance with Art. 153(4) EPC

(43) Date of publication:
**25.10.2023 Bulletin 2023/43**

(21) Application number: **21920802.2**

(22) Date of filing: **14.12.2021**

(51) International Patent Classification (IPC):
**B65D 19/44** (2006.01)     **B65D 19/38** (2006.01)
**B65D 6/24** (2006.01)     **B65D 85/00** (2006.01)
**B65D 90/00** (2006.01)

(52) Cooperative Patent Classification (CPC):
**B65D 7/00; B65D 19/38; B65D 19/44; B65D 85/00; B65D 90/00**

(86) International application number:
**PCT/CN2021/137862**

(87) International publication number:
**WO 2022/156428 (28.07.2022 Gazette 2022/30)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: 22.01.2021   CN 202120176743 U
22.01.2021   CN 202120188110 U
08.03.2021   CN 202110253399
08.03.2021   CN 202120492358 U

(71) Applicants:
• **CSI Cells Co., Ltd.**
**Suzhou, Jiangsu 215000 (CN)**
• **Canadian Solar Manufacturing (Changshu) Inc.**
**Suzhou, Jiangsu 215500 (CN)**

(72) Inventors:
• **PAN, Xiujuan**
**Suzhou**
**Jiangsu 215000 (CN)**
• **GU, Hao**
**Suzhou**
**Jiangsu 215000 (CN)**
• **TAN, Kang**
**Suzhou**
**Jiangsu 215000 (CN)**
• **DONG, Jingbing**
**Suzhou**
**Jiangsu 215000 (CN)**
• **XU, Tao**
**Suzhou**
**Jiangsu 215000 (CN)**

(74) Representative: **karo IP**
**karo IP Patentanwälte**
**Kahlhöfer Rößler Kreuels PartG mbB**
**Postfach 32 01 02**
**40416 Düsseldorf (DE)**

(54) **PACKAGING ASSEMBLY**

(57) A packaging assembly (100) includes: a tray (1) and a photovoltaic module assembly (2) provided on the tray (1). The photovoltaic module assembly (2) includes a plurality of photovoltaic modules (21). A long side (211) of each of the plurality of photovoltaic modules (21) is perpendicular to an upper surface of the tray, and a short side (212) of each of the plurality of photovoltaic modules (21) is parallel to the upper surface of the tray (1).

EP 4 265 535 A1

FIG. 5

## Description

## TECHNICAL FIELD

The present disclosure relates to the field of photovoltaic technology, and more particularly, to a packaging assembly.

## BACKGROUND

In related technologies, photovoltaic modules are usually packaged with the long sides thereof being in contact with the ground. However, according to this packaging way, photovoltaic modules supported by two trays, especially large-size photovoltaic modules supported by two trays (such as those with 210mm cell side length), cannot be packed into a container because their height is usually higher than the height of the container. Photovoltaic modules supported by a single tray are loaded into a container with the long sides thereof being in contact with a bottom surface of the container, which causes a waste in space inside the container and a higher transportation cost.

## SUMMARY

The present disclosure aims to solve at least one of the technical problems existing in the prior art. Therefore, one purpose of the present disclosure is to propose a packaging assembly, which can make full use of the space in a container, reduce the transportation cost, prevent tilt and collapse of photovoltaic modules and facilitate the disassembly of the photovoltaic modules.

A packaging assembly according to an embodiment of the present disclosure includes: a tray; and a photovoltaic module assembly provided on the tray. The photovoltaic module assembly includes a plurality of photovoltaic modules. A long side of each of the plurality of photovoltaic modules is perpendicular to an upper surface of the tray, and a short side of each of the plurality of photovoltaic modules is parallel to the upper surface of the tray.

In the packaging assembly according to the embodiment of the disclosure, a photovoltaic module assembly is provided on the tray, a long side of each of the plurality of photovoltaic modules is perpendicular to an upper surface of the tray, and a short side of each of the plurality of photovoltaic modules is parallel to the upper surface of the tray. In this way, the plurality of photovoltaic modules can be loaded into a container with long sides of the plurality of photovoltaic modules extending vertically to be transported, and the horizontal space occupied by the plurality of photovoltaic modules in the container can be reduced, therefore the space in the container can be fully used and the transportation cost can be effectively reduced.

According to some embodiments of the present disclosure, the packaging assembly further includes a reinforcing device including two reinforcing structures which are respectively located on two opposite sides of the photovoltaic module assembly. The reinforcing structure faces a side surface of each of the plurality of photovoltaic modules.

According to some embodiments of the present disclosure, each of the two reinforcing structures includes a first reinforcing structure including a first reinforcing bar, a second reinforcing bar and a third reinforcing bar. The first reinforcing bar and the second reinforcing bar are respectively located at the two adjacent edges of the photovoltaic module assembly. A lower end of the first reinforcing bar and a lower end of the second reinforcing bar are connected with the tray. An upper end surface of the first reinforcing bar is located below an upper end surface of the second reinforcing bar. The two first reinforcing bars and the two second reinforcing bars of the two reinforcing structures are respectively located at the four edges of the photovoltaic module assembly. The third reinforcing bar is obliquely connected between the first reinforcing bar and the second reinforcing bar.

According to some embodiments of the present disclosure, the third reinforcing bar is obliquely connected between an upper end of the first reinforcing bar and an upper end of the second reinforcing bar.

According to some embodiments of the present disclosure, a distance between the upper end surface of the first reinforcing bar and a top surface of the tray is $S_1$, a distance between the upper end surface of the second reinforcing bar and the top surface of the tray is $S_2$, and a distance between a top surface of the photovoltaic module assembly and the top surface of the tray is $S_3$, wherein $S_1$, $S_2$ and $S_3$ satisfy: $1/10_1 \leq S_1/S_3 \leq 1/3$, and/or $1/2 \leq S_2/S_3 \leq 2/3$.

According to some embodiments of the present disclosure, a distance between a top surface of each of the plurality of reinforcing structures and the top surface of the tray is $S_4$, and a distance between the top surface of the photovoltaic module assembly and the top surface of the tray is $S_3$, wherein $S_4$ and $S_3$ satisfy: $2/3 \leq S_4/S_3 \leq 1$.

According to some embodiments of the present disclosure, the packaging assembly further includes a packaging box including an enclosure. The enclosure surrounds an outer peripheral side of the photovoltaic module assembly and covers at least a part of the photovoltaic module assembly in the height direction of the photovoltaic module assembly. Each of the plurality of reinforcing structures is provided on an outer peripheral side of the enclosure.

According to some embodiments of the present disclosure, the enclosure includes a plurality of sidewalls that are sequentially connected in an end-to-end way along the outer peripheral side of the photovoltaic module assembly. At least one of the plurality of sidewalls is a first sidewall. The first sidewall has a first folding line dividing the first sidewall into a first sidewall part and a second sidewall part below the first sidewall part. The first sidewall part is foldable and/or tearable relative to the second sidewall part.

According to some embodiments of the present disclosure, the packaging assembly further includes: a bottom plate connected with a lower end of the enclosure and fixedly connected with the tray; and a top cover arranged on a top of the photovoltaic module assembly, the top cover, the bottom plate and the enclosure jointly covering an outer surface of the photovoltaic module assembly.

According to some embodiments of the present disclosure, the outer surface of the packaging assembly is surrounded by a plurality of first packaging belts, and the outer surface of the photovoltaic module assembly is surrounded by a plurality of second packaging belts.

According to some embodiments of the present disclosure, the plurality of first packaging belts include a plurality of transverse packaging belts which are provided on the outer peripheral side of the reinforcing structure and are spaced apart from each other along the height direction of the photovoltaic module assembly.

According to some embodiments of the present disclosure, two outermost photovoltaic modules in the photovoltaic module assembly are a first photovoltaic module and a second photovoltaic module, and a front surface of the first photovoltaic module and a front surface of the second photovoltaic module face each other.

According to some embodiments of the present disclosure, the front surfaces of the plurality of photovoltaic modules are stacked in the same direction. The reinforcing device is provided on the tray.

According to some embodiments of the present disclosure, the reinforcing device is located on an outer peripheral side of the photovoltaic module assembly.

According to some embodiments of the present disclosure, the reinforcing device includes: four third reinforcing bars, wherein the four third reinforcing bars all extend along a vertical direction and are respectively located at four edges of the photovoltaic module assembly, and the lower ends of the four third reinforcing bars are connected with the tray; at least two fourth reinforcing bars, wherein each of the at least two fourth reinforcing bars is connected between upper ends of two adjacent third reinforcing bars, and at least two fourth reinforcing bars are located at a radially outer side of the photovoltaic module assembly; and at least two fifth reinforcing bars, an upper end of each of the at least two fifth reinforcing bars is connected with the upper ends of the two adjacent third reinforcing bars, a lower end of each of the at least two fifth reinforcing bars is connected with the lower ends of the two adjacent third reinforcing bars, and the at least two fifth reinforcing bars are located at the radially outer side of the photovoltaic module assembly.

According to some embodiments of the present disclosure, a length of the photovoltaic module is L and a width of the photovoltaic module is W, wherein L and W satisfy: $1.5 < L/W < 1.9$.

According to some embodiments of the present disclosure, the tray is a rectangular tray, side edges of the photovoltaic module assembly are parallel to an edge of the tray, and a distance between at least one of the side edges of the photovoltaic module assembly and a corresponding edge of the tray is d, wherein the d satisfies: $5mm \leq d \leq 30mm$.

According to some embodiments of the present disclosure, a distance between the top surface of the reinforcing device and the tray is di, and a distance between the top surface of the photovoltaic module assembly and the tray is $d_2$, wherein $d_1$ and $d_2$ satisfy: $1/2d_2 \leq d_1 \leq 2/3d_2$.

According to some embodiments of the present disclosure, the packaging assembly further includes: an enclosure surrounding an outer peripheral side of the photovoltaic module assembly and covering at least a part of the photovoltaic module assembly in the height direction of the photovoltaic module assembly, and the enclosure is located between the photovoltaic module assembly and the reinforcing device; and a top cover arranged on a top of the photovoltaic module assembly.

According to some embodiments of the present disclosure, the photovoltaic module assembly is formed as a cuboid structure and includes two first sidewalls and two second sidewalls, the two first sidewalls are opposite to each other, and the two second sidewalls are opposite to each other. The reinforcing device is located on an outer peripheral side of the photovoltaic module assembly. The reinforcing device includes four first reinforcing bars and a plurality of second reinforcing bars. The four first reinforcing bars are respectively located at four edges of the photovoltaic module assembly. Lower ends of the four first reinforcing bars are connected with the tray. The second reinforcing bar is connected between two adjacent first reinforcing bars. The plurality of the second reinforcing bars include at least one first sub-bar including a body and two connecting parts. The two connecting parts are respectively connected at both ends of the body. The body is located between the two adjacent first reinforcing bars and faces the first sidewall, and the two connecting parts respectively face the two second sidewalls, and the first sub-bar is connected with corresponding two first reinforcing bars through the two connecting parts.

According to some embodiments of the present disclosure, the top surface of the reinforcing device is located at least the gravity center of the photovoltaic module assembly.

According to some embodiments of the present disclosure, a height of the packaging assembly is H, wherein the H satisfies: $2100mm \leq H \leq 2520mm$.

Additional aspects and advantages of the present disclosure will be given at least in part in the following description, and a part of the additional aspects and advantages of the present disclosure become apparent from the following description, or can be learned from practicing of the present disclosure.

## BRIEF DESCRIPTION OF DRAWINGS

The above and/or additional aspects and advantages of the present disclosure will become apparent and easy to understand from the description of embodiments in combination with the following drawings, wherein:

FIG. 1 is a three-dimensional diagram showing a structure of a packaging assembly according to an embodiment of the present disclosure;
FIG. 2 is an enlarged view of part A shown in FIG. 1;
FIG. 3 is another three-dimensional diagram showing a structure of a packaging assembly according to an embodiment of the present disclosure;
FIG. 4 is yet another three-dimensional diagram showing a structure of a packaging assembly according to an embodiment of the present disclosure;
FIG. 5 is still another three-dimensional diagram showing a structure of a packaging assembly according to an embodiment of the present disclosure;
FIG. 6 is a diagram showing a structure of a part of a packaging assembly according to an embodiment of the present disclosure;
FIG. 7 is a three-dimensional diagram showing a structure of a packaging box and a tray according to an embodiment of the present disclosure;
FIG. 8 is a three-dimensional diagram showing a structure of an enclosure, a photovoltaic module assembly and a tray according to an embodiment of the present disclosure;
FIG. 9 is a three-dimensional diagram showing a structure of a photovoltaic module assembly and a tray according to an embodiment of the present disclosure;
FIG. 10 is a schematic diagram showing a packaging process of the photovoltaic module assembly according to an embodiment of the present disclosure;
FIG. 11 is a three-dimensional diagram showing a structure of a tray according to an embodiment of the present disclosure;
FIG. 12 is another three-dimensional diagram showing a structure of a packaging assembly according to an embodiment of the present disclosure;
FIG. 13 is yet another three-dimensional diagram showing a structure of a packaging assembly according to an embodiment of the present disclosure;
FIG. 14 is still another three-dimensional diagram showing a structure of a packaging assembly according to an embodiment of the present disclosure;
FIG. 15 is a three-dimensional diagram showing a structure of a first sub-bar of the packaging assembly according to an embodiment of the present disclosure;
FIG. 16 is a diagram showing a connection of a second sub-bar and a first sub-bar according to an embodiment of the present disclosure;
FIG. 17 is a connection showing a connection of a second sub-bar and the first sub-bar according to another embodiment of the present disclosure;
FIG. 18 is a schematic diagram showing a top cover, an enclosure and a reinforcing device according to an embodiment of the present disclosure;
FIG. 19 is a schematic diagram of a packaging assembly according to an embodiment of the present disclosure;
FIG. 20 is another three-dimensional diagram showing a structure of a packaging assembly according to an embodiment of the present disclosure; and
FIG. 21 is a schematic diagram showing a plurality of photovoltaic modules of a packaging assembly according to an embodiment of the present disclosure.

Reference Numerals

100: Packaging assembly; 1: Tray; 11: Tray pier; 2: Photovoltaic module assembly; 21: Photovoltaic module; 211: Long side; 212: Short side; 213: First sidewall; 214: Second sidewall; 30: reinforcing device; 3: Reinforcing structure; 31: First reinforcing structure; 311: First reinforcing bar; 3111: First groove; 3112: First reinforcing segment; 3113: Second reinforcing segment; 312: Second reinforcing bar; 313: Third reinforcing bar; 314: Seventh reinforcing bar; 32: Second reinforcing structure; 321: Fourth reinforcing bar; 3211: First protruding part; 3212: Third reinforcing segment; 3213: Fourth reinforcing segment; 322: Fifth reinforcing bar; 323: Sixth reinforcing bar; 324: Eighth reinforcing bar; 41: First reinforcing bar; 411: Reinforcing plate-type bar; 412: Reinforcing corner protecting bar; 42: second reinforcing bar; 421: First sub-bar; 4211: Body; 4212: Connection part; 422: Second sub-bar; 43: Third reinforcing bar; 431: First reinforcing sub-bar; 432: Second reinforcing sub-bar; Fourth reinforcing bar 44; 45: Fifth reinforcing bar; 5: Packaging buffer; 6: Packaging box; 61: Enclosure; 61a: First enclosure part; 61b: Second enclosure part; 611: First sidewall; 6111: First sidewall part; 6112: Second sidewall part; 6113: Protruding part; 612: Second sidewall; 6121: Third sidewall part; 6122: Fourth sidewall part; 62: Bottom plate; 63: Top cover; 7: First folding line; 71: Protruding segment; 72: Straight line segment; 8: Second folding line; 9: First packaging belt; 91: Horizontal packaging belt; 911: First sub-packaging belt; 912: Second sub-packaging belt; 12: Second packaging belt; 13: Nail.

## DESCRIPTION OF EMBODIMENTS

Embodiments of the present disclosure will be described in detail below. The embodiments described with reference to the attached drawings are exemplary. The embodiments of the present disclosure will be described in detail below.

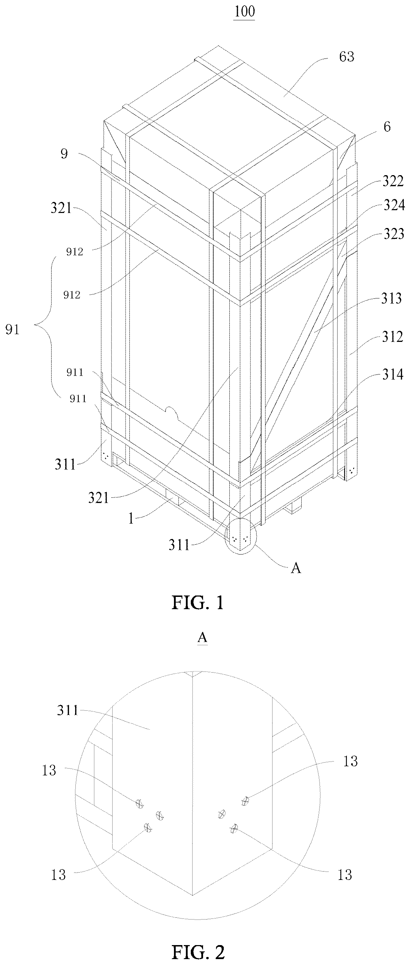

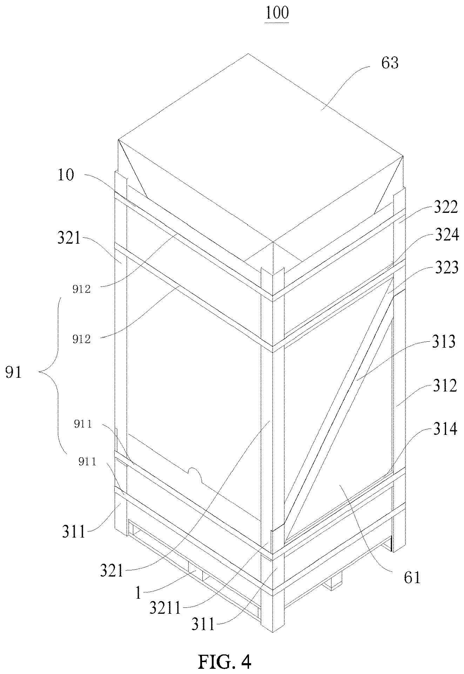

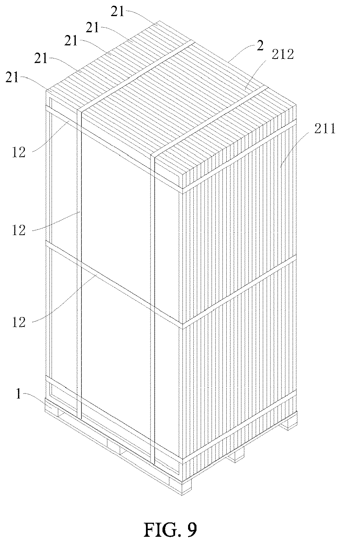

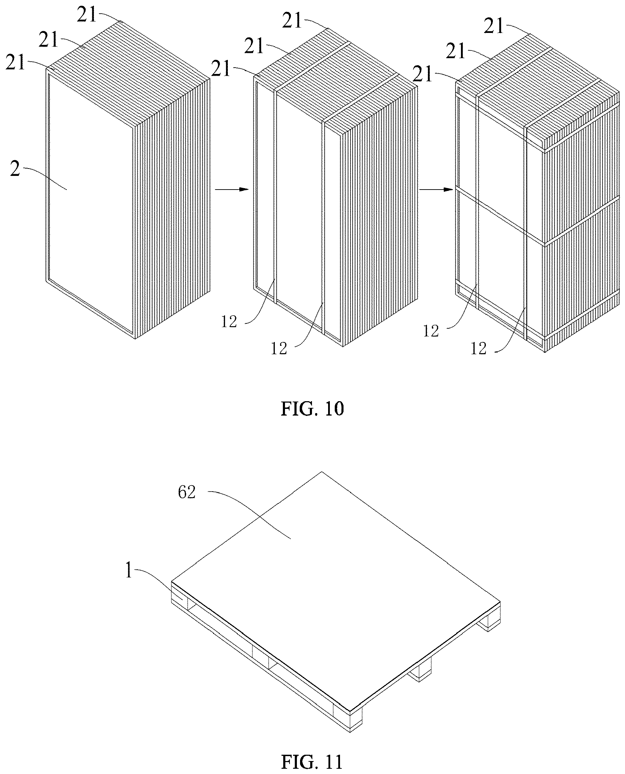

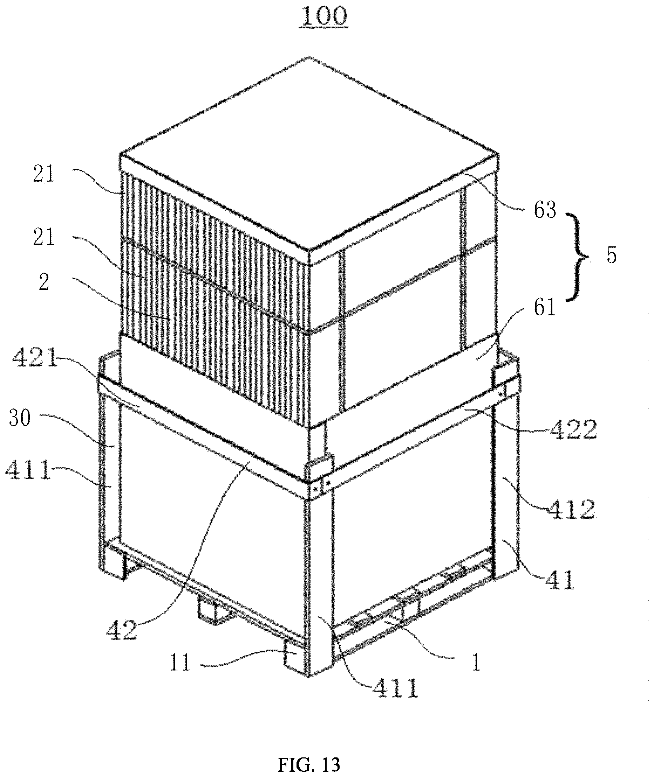

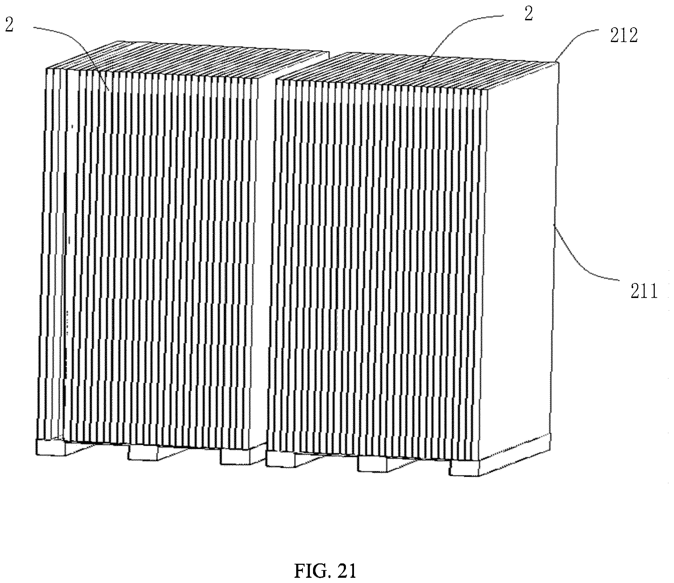

With reference to FIGS. 1 to 21, a packaging assembly 100 according to an embodiment of the present disclosure will be described below .

As shown in Fig. 1, FIG. 3 to FIG. 5, FIG. 8 to FIG. 9, FIG. 12 to FIG. 14 and FIG. 19 to FIG. 21, a packaging assembly 100 according to an embodiment of the present disclosure includes a tray 1 and a photovoltaic module assembly 2.

The photovoltaic module assembly 2 is provided on the tray 1. The photovoltaic module assembly 2 includes a plurality of photovoltaic modules 21. A long side 211 of each of the plurality of photovoltaic modules 21 is perpendicular to an upper surface of the tray 1, and a short side 212 of each of the plurality of photovoltaic modules 21 is parallel to the upper surface of the tray 1. At this time, the plurality of photovoltaic modules 21 are placed side by side and are placed in a vertical direction. In the description of the present disclosure, "plurality of' means two or more.

For example, in the examples of FIG. 1, FIG. 3 to FIG. 5, FIG. 8 to FIG. 9, FIG. 12 to FIG. 14 and FIG. 19 to FIG. 21, the tray 1 can be located at the bottom of the plurality of photovoltaic modules 21. That is, the tray 1 can be located at the bottom of the photovoltaic module assembly 2, and thus can effectively protect the bottom of the plurality of photovoltaic modules 21 and prevent the plurality of photovoltaic modules 21 from being damaged during installation, disassembly and transportation. The plurality of photovoltaic modules 21 are placed vertically. For example, in the examples of FIG. 1, FIG. 3 to FIG. 5, FIG. 8 to FIG. 9, FIG. 12 to FIG. 14 and FIG. 19 to FIG. 21, the plurality of photovoltaic modules 21 can be set in sequence along a thickness direction of the photovoltaic module 21. At this time, a length direction of each photovoltaic module 21 can be the same as the vertical direction, and the short side 212 of each photovoltaic module 21 can be in contact the upper surface of the tray 1, and the long side 211 of each photovoltaic module 21 is perpendicular to the upper surface of the tray 1 (in other words, perpendicular to the ground). When the size of the photovoltaic module 21 is large (for example, the side length of the cell reaches 210mm), the packaging assembly 100 including the photovoltaic module assembly 2 placed vertically can easily pass through the container door. Moreover, the horizontal dimension of the photovoltaic module assembly 2 is relatively small, which can reduce the horizontal space occupied by the photovoltaic module assembly 2 in the container during transportation, thus improving the loading rate.

As shown in FIG. 1, FIG. 3 and FIG. 6, the packaging assembly 100 may further include a reinforcing device 30. The reinforcing device 30 may include two reinforcing structures 3 which are respectively located on two opposite sides of the photovoltaic module assembly 2. Each of the two reinforcing structures 3 faces a side surface of each of the plurality of photovoltaic modules 21. It should be noted that, "the side surface" of the photovoltaic module 21 can be understood as a side surface perpendicular to a front surface, a back surface, a top surface and a bottom surface of the photovoltaic module 21. When the photovoltaic module 21 is placed vertically on the tray 1, the top surface of the photovoltaic module 21 is the upper surface of the photovoltaic module 21, and the bottom surface of the photovoltaic module 21 is the lower surface of the photovoltaic module 21 (that is, the surface that is in contact with the tray 1). When the photovoltaic module 21 is a single-glass module, the front surface of the photovoltaic module 21 can be a light-receiving surface of the photovoltaic module 21. When the photovoltaic module 21 is a double-glass module, the front surface of the photovoltaic module 21 can be a main light-receiving surface of the photovoltaic module 21, and the back surface of the photovoltaic module 21 is a surface opposite to the front surface. Therefore, by setting the two reinforcing structures 3 above, the structural strength of the packaging assembly 100 can be effectively enhanced. At the same time, the two reinforcing structures 3 can play the role of load-bearing and structural strengthening together with the tray 1, thus preventing tilt and collapse of the photovoltaic modules 21 and ensuring the stability of the photovoltaic modules 21. Moreover, since the two reinforcing structures 3 face the two side surfaces of the photovoltaic module assembly 2, the two reinforcing structures 3 play an effective role in supporting the side edges of the plurality of photovoltaic modules 21, and can generate a certain pulling force on the side edges of the plurality of photovoltaic modules 21, so as to prevent the photovoltaic module 21 from tipping along the thickness direction and thus to prevent the glasses from being damaged, thereby improving the transport reliability of the photovoltaic modules 21. In addition, because the two reinforcing structures 3 are spaced apart from each other, interference of the photovoltaic modules 21 with a part between the two reinforcing structures 3 can be avoided during the disassembly of the photovoltaic modules 21, which makes the disassembly of the photovoltaic modules 21 more convenient and can reduce the material cost of the packaging assembly 100 to a certain extent.

In some embodiments of the present disclosure, referring to FIGS. 1-6, each of the two reinforcing structures 3 includes a first reinforcing structure 31. Each first reinforcing structure 31 includes a first reinforcing bar 311 and a second reinforcing bar 312. The first reinforcing bar 311 and the second reinforcing bar 312 are respectively located at two adjacent edges of the photovoltaic module assembly 2. A lower end of the first reinforcing bar 311 and a lower end of the second reinforcing bar 312 are connected with the tray 1. For example, the bottom of the tray 1 can be provided with a plurality of tray foot piers 11, and the lower end of each first reinforcing bar 311 is fixedly connected with the corresponding tray foot piers 11, for example, through nails 13. An upper end surface of the first reinforcing bar 311 is located below an upper end surface of the second reinforcing bar 312. The two first reinforcing bars 311 and two second reinforcing bars 312 of the two first reinforcing structures 31 are respectively located at four edges of the photovoltaic module assembly 2. Therefore, by setting the above first reinforcing structure 31, the height of the first reinforcing bar 311 is smaller than the height of the second reinforcing bar 312. When disassembled, the plurality of photovoltaic modules 21 can be removed from the first reinforcing bar 311, so that it is not necessary to remove the first reinforcing structure 31, which facilitates the disassembly of the photovoltaic module assembly 2 and makes the plurality of photovoltaic modules 21 easier to be removed. In addition, the two first reinforcing bars 311 and the two second reinforcing bars 312 can effectively protect the edges of the photovoltaic module assembly 2 and avoid damage to the photovoltaic module assembly 2 when being turned over and transported..

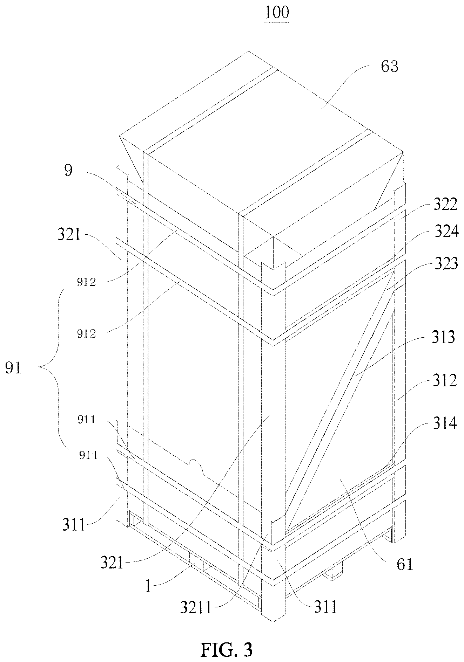

Further, in combination with FIG. 3 to FIG. 5, each reinforcing structure 3 further includes a second reinforcing structure 32. The two second reinforcing structures 32 and the two first reinforcing structures 31 fit with each other in one-to-one correspondence. For example, the second reinforcing structure 32 fit onto the top of the first reinforcing structure 31. At this time, for example, the reinforcing device 30 can be provided on the outer peripheral side of the photovoltaic module assembly 2. Each second reinforcing structure 32 includes a fourth reinforcing bar 321 and a fifth reinforcing bar 322. A lower end of the fourth reinforcing bar 321 faces an upper end of the corresponding first reinforcing bar 311, and a lower end of the fifth reinforcing bar 322 faces an upper end of the corresponding second reinforcing bar 312. Therefore, by setting the second reinforcing structure 32 above, each second reinforcing structure 32 can be located above the corresponding first reinforcing structure 31, thus increasing the height of the entire reinforcing device 30, preventing tilt and collapse of the photovoltaic module assembly 2 during the turnover and transportation of packaging assembly 100, and improving the stability of the photovoltaic module assembly 2. Moreover, the two fourth reinforcing bars 321 and two fifth reinforcing bars 322 of the two second reinforcing structures 32 can effectively protect the upper part of the edges of the photovoltaic module assembly 2, thus further avoiding damage to the photovoltaic module assembly 2. In addition, in order to take out the photovoltaic modules 21, only two second reinforcing structures 32 need to be removed during disassembly. The two first reinforcing structures 31 can still play an effective role in protecting the photovoltaic module assembly 2 and preventing tilt and collapse of the photovoltaic module assembly 2, thus ensuring the disassembly reliability of the photovoltaic modules 21.

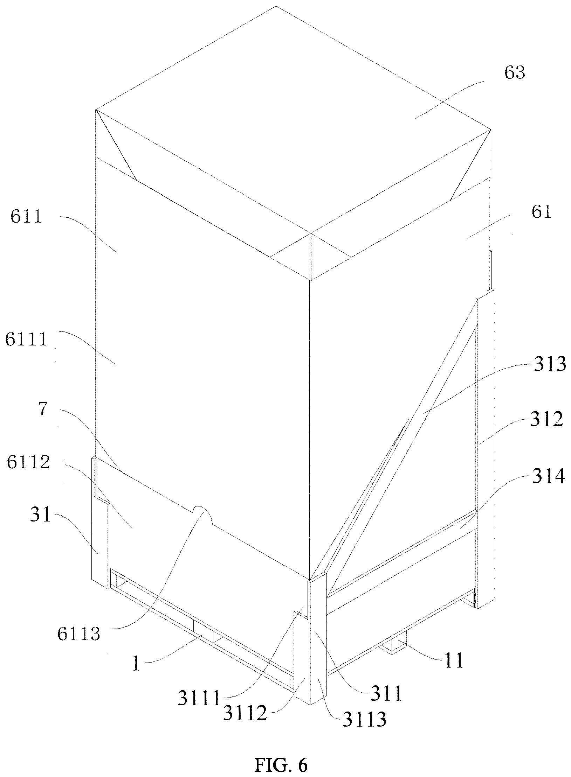

In some embodiments of the present disclosure, referring to FIG. 6, two first reinforcing bars 311 of two first reinforcing structures 31 are adjacent to each other, and two second reinforcing bars 312 of two first reinforcing structures 31 are adjacent to each other. In this way, due to a lower height of the first reinforcing bar 311, during disassembly, multiple photovoltaic modules 21 can be removed from the side where the two first reinforcing bars 311 are located, thereby the operation is very convenient. Moreover, due to a higher height of the two second reinforcing bars 312, the two second reinforcing bars 312 can play an effective anti-dumping role in the disassembly process of the photovoltaic module modules 21, thereby achieving the reliability of the disassembly of multiple photovoltaic modules 21, and avoiding damage to the photovoltaic modules 21 while improving the disassembly efficiency.

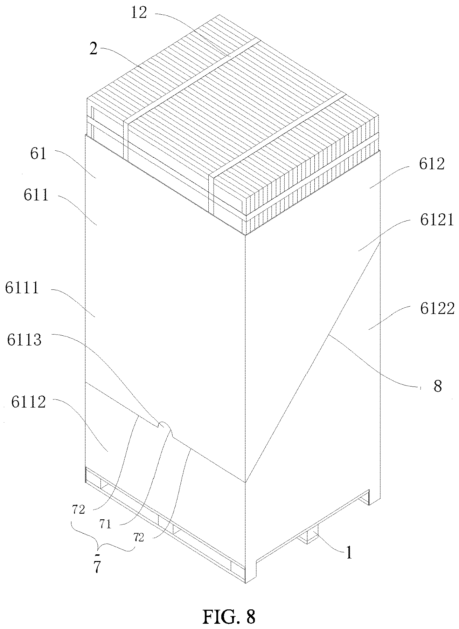

In some embodiments of the present disclosure, with reference to FIGS. 6 and 8, a plurality of photovoltaic modules 21 are successively arranged in a direction perpendicular to a direction from one of the first reinforcing structures 31 to another reinforcing structure 31. For example, in the examples of FIGS. 6 to 8, a plurality of photovoltaic modules 21 are successively arranged along a direction from the first reinforcing bar 311 to the second reinforcing bar of a same first reinforcing structure 31. Therefore, the two first reinforcing structures 31 can respectively faces two side surfaces of the photovoltaic module assembly 2, so that the two first reinforcing structures 31 can effectively support side edges of the plurality of photovoltaic modules 21, thus avoiding damages to glass due to tilt and collapse of the hotovoltaic modules 21 during the disassembly process, and improving the disassembly reliability of the hotovoltaic modules 21.

In some embodiments of the present disclosure, referring to FIGS. 1, 3 and 6, the first reinforcing structure 31 further includes a third reinforcing bar 313 which is obliquely connected between the first reinforcing bar 311 and the second reinforcing bar 312. By setting the third reinforcing bar 313 above, the third reinforcing bar 313 can be used to connect the first reinforcing bar 311 and the second reinforcing bar 312, so as to improve the structural strength of the whole first reinforcing structure 31. In this way, the first reinforcing structure 31 can bear a greater load, and the third reinforcing bar 313 that is disposed obliquely can play a better tensile role on the side surfaces of the plurality of photovoltaic modules 21 and can better prevent tilt and collapse of the photovoltaic modules 21.

In some optional embodiments of the present disclosure, with reference to FIGS. 3 to 6, the third reinforcing bar 313 is connected between the upper end of the first reinforcing bar 311 and the upper end of the second reinforcing bar 312. For example, the third reinforcing bar 313 is obliquely connected between the upper end of the first reinforcing bar 311 and the upper end of the second reinforcing bar 312. In this way, the third reinforcing bar 313 can be located at the waist line of the photovoltaic module assembly 2, and the third reinforcing bar 313, the first reinforcing bar 311 and the corresponding second reinforcing bar 312 can form a roughly trapezoidal structure, thereby further improving the structural strength of the first reinforcing structure 31. Moreover, the height of the third reinforcing bar 313 is higher, which can better prevent tilt and collapse of the photovoltaic module assembly 2.

In some embodiments of the present disclosure, the second reinforcing structure 32 further includes a sixth reinforcing bar 323 which is obliquely connected between the fourth reinforcing bar 321 and the fifth reinforcing bar 322. The sixth reinforcing bar 323 can be used to connect the fourth reinforcing bar 321 and the fifth reinforcing bar 322, so as to improve the structural strength of the whole second reinforcing structure 32. In this way, the second reinforcing structure 32 can bear a greater load, and the sixth reinforcing bar 323 that is disposed obliquely can play a better tensile role on the side surfaces of the plurality of photovoltaic modules 21, and better prevent tilt and collapse of photovoltaic modules 21.

Further, in combination with FIGS. 1, 3 and 5, the sixth reinforcing bar 323 is connected between the lower end of the fourth reinforcing bar 321 and the lower end of the fifth reinforcing bar 322. For example, the sixth reinforcing bar 323 is obliquely connected between the lower end of the fourth reinforcing bar 321 and the lower end of the fifth reinforcing bar 322. In this way, the sixth reinforcing bar 323 can be located at the waist line of the photovoltaic module assembly 2, and the sixth reinforcing bar 323 and the corresponding fourth reinforcing bar 321 and the corresponding fifth reinforcing bar 322 can form a roughly trapezoidal structure, which can improve the structural strength of the second reinforcing structure 32, so that the whole reinforcing structure 3 can bear a greater load and better prevent the photovoltaic module assembly 2 from tipping.

By setting the third reinforcing bar 313 and the sixth reinforcing bar 323 above, the third reinforcing bar 313 and the sixth reinforcing bar 323 can both be located at the waist line of the photovoltaic module assembly 2. The third reinforcing bar 313, the first reinforcing bar 311 and the corresponding second reinforcing bar 312 can form a roughly trapezoidal structure. The sixth reinforcing bar 323, the fourth reinforcing bar 321 and the corresponding fifth reinforcing bar 322 can form a roughly trapezoidal structure. Thus, the structural strength of the first reinforcing structure 31 and the second reinforcing structure 32 can be improved, so that the reinforcing device 30 can bear a greater load and better prevent tilt and collapse of the photovoltaic module assembly 2.

Optionally, in combination with FIGS. 1, 3 and 6, the sixth reinforcing bar 323 and the third reinforcing bar 313 can be parallel and in contact with each other. In this way, the overall structural strength of the sixth reinforcing bar 323 and the third reinforcing bar 313 can be higher, and the plurality of photovoltaic modules 21 can be protected. In addition, the overall width of the sixth reinforcing bar 323 and the third reinforcing bar 313 is larger, which can increase the friction force between the sixth reinforcing bar 323 and the side surfaces of the plurality of photovoltaic modules 21, and the friction force between the third reinforcing bar 313 and the side surfaces of the plurality of photovoltaic modules 21, so as to further prevent tilt and collapse of the plurality of photovoltaic modules 21.

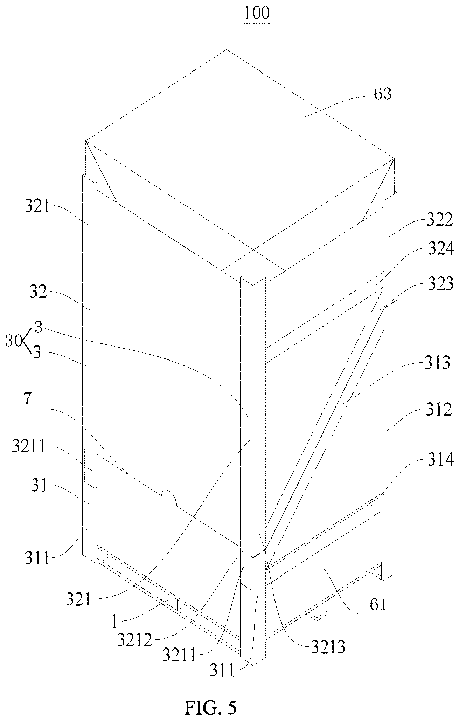

In some embodiments of the present disclosure, referring to FIGS. 5 and 6, the upper end of each first reinforcing bar 311 and the upper end of each second reinforcing bar 312 are formed with a first groove 3111. The lower end of each fourth reinforcing bar 321 and the lower end of each fifth reinforcing bar 322 are provided with a first protrusion 3211. The first protrusion 3211 fits in the corresponding first groove 3111. Therefore, the engagement between the first reinforcing bar 311 and the fourth reinforcing bar 321, as well as the engagement between the second reinforcing bar 312 and the fifth reinforcing bar 322, can be made closer by matching the first protrusion 3211 with the corresponding first groove 3111. Moreover, in this way, the first reinforcing bar 311 and the fourth reinforcing bar 321 can be disposed slightly different in the horizontal direction and can interlock with each other, and the second reinforcing bar 312 and the fifth reinforcing bar 322 can be disposed slightly different in the horizontal direction and can interlock with each other. When performing packaging via a packaging belt, the packaging belt can contact the first reinforcing bar 311 and the corresponding fourth reinforcing bar 321 at the same time, and can contact the second reinforcing bar 312 and the corresponding fifth reinforcing bar 322 at the same time, so that the first reinforcing structure 31, the second reinforcing structure 32 and the photovoltaic module assembly 2 are packaged as one structure, which makes the structure more stable.

In some embodiments of the present disclosure, as shown in FIGS. 5 and 6, each first reinforcing bar 311 and each second reinforcing bar 312 include a first reinforcing segment 3112 and a second reinforcing segment 3113 which are perpendicular to each other. The first reinforcing segment 3112 faces one side surface of the photovoltaic module assembly 2, and the second reinforcing segment 3113 faces another side surface of the photovoltaic module assembly 2 that is adjacent to the one side surface. The upper end of the second reinforcing segment 3113 extends beyond the upper end of the first reinforcing segment 3112 to define the first groove 3111 between the upper end of the first reinforcing segment 3112 and the upper end of the second reinforcing segment 3113. Each fourth reinforcing bar 321 and each fifth reinforcing bar 322 include a third reinforcing segment 3212 and a fourth reinforcing segment 3213 that are perpendicular to each other. The third reinforcing segment 3212 faces the first reinforcing segment 3112 in the vertical direction, and the fourth reinforcing segment 3213 faces the second reinforcing segment 3113 in the vertical direction. A lower end of the third reinforcing segment 3212 extends beyond the lower end of the fourth reinforcing segment 3213 to form a first protrusion 3211.

For example, in the examples of FIGS. 5 and 6, a groove is defined between the lower end of the fourth reinforcing segment 3213 and the third reinforcing segment 3212. When the first reinforcing structure 31 cooperates with the second reinforcing structure 32, the first protrusion 3211 fits into the first groove 3111, and the upper end of the second reinforcing segment 3113 fits into the above groove, so as to realize a close engagement between the first reinforcing bar 311 and the fourth reinforcing bar 321, and a close engagement between the second reinforcing bar 312 and the fifth reinforcing bar 322. At this time, the first protrusion 3211 and the upper end of the second reinforcing segment 3113 correspond to each other in the horizontal direction. Therefore, by setting the first reinforcing segment 3112 and the second reinforcing segment 3113 which are perpendicular to each other, as well as the third reinforcing segment 3212 and the fourth reinforcing segment 3213 which are perpendicular to each other, it can better bear the photovoltaic module assembly 2 and better reinforce the photovoltaic module assembly 2. In this way, the photovoltaic module assembly 2 can be effectively prevented from tilting towards the direction of the first reinforcing segment 3112 and the third reinforcing segment 3212, and towards the direction of the second reinforcing segment 3113 and the fourth reinforcing segment 3213. Moreover, when performing packaging using a packaging belt, the packaging belt can contact the first groove 3211 and the upper end of the second reinforcing segment 3113 at the same time, and thus can bundling the fourth reinforcing bar 321 and the corresponding first reinforcing bar 311, and the fifth reinforcing bar 322 and the corresponding second reinforcing bar 312 up at the same time, so as to improve the structural stability of the entire packaging assembly 100.

In some optional embodiments of the present disclosure, the upper end of the second reinforcing segment 3113 is formed with a second groove (not shown). The second groove is connected with and is in communication with the first groove 3111. The lower end of the fourth reinforcing segment 3213 is provided with a second protrusion. The second protrusion is connected with and is perpendicular to the first protrusion 3211, and the second protrusion fits into the second groove. For example, before processing, an upper end surface of each first reinforcing segment 3112 and an upper end surface of each second reinforcing segment 3113 can be in a same horizontal plane, and an lower end surface of each third reinforcing segment 3212 and an lower end surface of each fourth reinforcing segment 3213 can be in a same horizontal plane. During processing, the second reinforcing segment 3113 can be first cut downward and vertically, and then can be cut horizontally towards the direction of the first reinforcing segment 3112. When cutting into the joint of the first reinforcing segment 3112 and the second reinforcing segment 3113, the first reinforcing segment 3112 can be cut horizontally, and the first groove 3111 and the second groove can be finally formed. Similarly, the second protrusion and the first protrusion 3211 can be formed by first cutting the fourth reinforcing segment 3213 vertically, then cutting the fourth reinforcing segment 3213 horizontally, and finally cutting the third reinforcing segment 3212 horizontally.

Therefore, because the thickness of the joint between the first reinforcing segment 3112 and the second reinforcing segment 3113 and the joint between the third reinforcing segment 3212 and the fourth reinforcing segment 3213 is relatively thick, by setting the second groove and the second protrusion, it is not necessary to cut the joint between the first reinforcing segment 3112 and the second reinforcing segment 3113 vertically and the joint between the third reinforcing segment 3212 and the fourth reinforcing segment 3213 vertically during processing, thus making the processing of the whole reinforcing structure 3 more convenient. Moreover, since the second protrusion and the first protrusion 3211 can be connected with each other orthogonally, the joint between the second protrusion and the first protrusion 3211 can faces an edge of the photovoltaic module assembly 2, which can effectively protect the edge of the photovoltaic module assembly 2 and avoid damaging the edge of the photovoltaic module assembly 2 during packaging.

In some embodiments of the present disclosure, in combination with FIGS. 1, 3 to 6, the first reinforcing structure 31 further includes a seventh reinforcing bar 314 that horizontally connected between the first reinforcing bar 311 and the second reinforcing bar 312. The second reinforcing structure 32 further includes an eighth reinforcing bar 324 that is horizontally connected between the fourth reinforcing bar 321 and the fifth reinforcing bar 322. For example, in the examples in FIGS. 1 and 3 to 6, the seventh reinforcing bar 314 is located below the third reinforcing bar 313, and the eighth reinforcing bar 324 is located above the sixth reinforcing bar 323. Therefore, the structural strength of the first reinforcing structure 31 and the second reinforcing structure 32 can be further improved by setting the seventh reinforcing bar 314 and the eighth reinforcing bar 324, and the load-bearing capacity of the first reinforcing structure 31 and the second reinforcing structure 32 can be effectively improved, thus ensuring the stability of the photovoltaic module assembly 2. Moreover, since both the seventh reinforcing bar 314 and the eighth reinforcing bar 324 are horizontally arranged, the material consumption of the seventh reinforcing bar 314 and the eighth reinforcing bar 324 can be reduced, thus reducing the weight and cost of the entire packaging assembly 100.

In some embodiments of the present disclosure, referring to FIG. 6, the two first reinforcing bars 311 of the two first reinforcing structures 31 are adjacent to each other, and the two second reinforcing bars 312 of the two first reinforcing structures 31 are adjacent to each other. In this way, due to the low height of the first reinforcing bars 311, the plurality of photovoltaic modules 21 can be removed from the side where the two first reinforcing bars 311 are located during disassembly, thereby simplifying the operation. Moreover, due to the high height of the two second reinforcing bars 312, the two second reinforcing bars 312 can play an effective anti-tilting role in the disassembly process of photovoltaic modules 21, thus achieving the reliability of the disassembly of the plurality of photovoltaic modules 21, and avoiding damage to the photovoltaic modules 21 while improving the disassembly efficiency.

In some embodiments of the present disclosure, as shown in FIGS. 1 to 5, a distance between the upper end of the first reinforcing bar 311 and the top surface of the tray 1 is $S_1$, a distance between the upper end surface of the second reinforcing bar 312 and the top surface of the tray 1 is $S_2$, and a distance between the top surface of the photovoltaic module assembly 2 and the top surface of the tray 1 is $S_3$, wherein $S_1$, $S_2$ and $S_3$ satisfy: $1/10 \leq S_1/S_3 \leq 1/3$, and/or $1/2 \leq S_2/S_3 \leq 2/3$. Therefore, when $1/10 \leq S_1/S_3 \leq 1/3$, the height of the first reinforcing bar 311 is small, which facilitates the removal of the plurality of photovoltaic modules 21 from the first reinforcing bar 311. The weight of the first reinforcing bar 311 can be small, which facilitates reducing the cost of packaging assembly 100. When $1/2 \leq S_2/S_3 \leq 2/3$, the upper end face of the second reinforcing bar 312 can reach the gravity center of the photovoltaic module assembly 2, so that the top surface of the entire reinforcing structure 3 can be higher than the gravity center of the photovoltaic module assembly 2, thereby preventing the photovoltaic module assembly 2 from tilting, and facilitating the assembly, disassembly and transport of the photovoltaic module assembly 2.

Optionally, referring to FIGS. 1 to 5, the upper end faces of the two fourth reinforcing bars 321 of the two second reinforcing structures 32 and the upper end surfaces of the two fifth reinforcing bars 322 of the two second reinforcing structures 32 are located in a same horizontal plane. Therefore, the fourth reinforcing bars 321 and the fifth reinforcing bars 322 disposed in this way can better protect the upper part of the photovoltaic module assembly 2, make the stress on the four edges of the photovoltaic module assembly 2 more uniform, thus improving the stability of the photovoltaic module assembly 2 and avoiding the tilt and collapse of the photovoltaic module assembly 2.

In some embodiments of the present disclosure, in combination with FIGS. 1 to 5, the structure of each second reinforcing structure 32 is the same as that of each first reinforcing structure 31. In this way, the versatility of the first reinforcing structure 31 and the second reinforcing structure 32 can be improved, the processing is more convenient, and the production efficiency of the whole reinforcing structure 3 can be effectively improved.

In some embodiments of the present disclosure, as shown in FIGS. 1 to 5, the top surface of each reinforcing structure 3 is at least at the gravity center of the photovoltaic module assembly. The top surface of the reinforcing structure 3 can be as high as the gravity center of the photovoltaic module assembly 2. Alternatively, the top surface of the reinforcing structure 3 can be higher than the gravity center of the photovoltaic module assembly 2. Therefore, through the above setting, the reinforcing structure 3, together with the tray 1, can play a role of bearing and strengthening the photovoltaic module assembly 2, thus further preventing tilt and collapse of the photovoltaic module assembly 2 and ensuring the stability of the photovoltaic module assembly 2.

In some embodiments of the present disclosure, as shown in FIGS. 1 to 5, a distance between the top surface of each reinforcing structure 3 and the top surface of tray 1 is $S_4$, and a distance between the top surface of the photovoltaic module assembly 2 and the top surface of tray 1 is $S_3$, wherein S4 and S3 satisfy: $2/3 \leq S_4/S_3 \leq 1$. Specifically, for example, when $S_4/S_3 < 2/3$, the height of reinforcing structure 3 is low, thus it is not easy to ensure the stability of the photovoltaic module assembly 2, and the photovoltaic module assembly 2 is easy to title. When $S_4/S_3 > 1$, the structural strength of the photovoltaic module assembly 2 is effectively enhanced and the height of the reinforcing structure 3 is higher, making the weight of the reinforcing structure 3 heavier, which has a certain impact on the assembly, disassembly and transport of the photovoltaic module assembly 2 and increases the cost. In addition, the height of the reinforcing structure 3 may be higher than the height of the container, resulting in the packaging assembly 100 cannot be loaded into the container. Therefore, by making $S_4$ and $S_3$ satisfy $2/3 \leq S_4/S_3 \leq 1$, it can effectively ensure that the top surface of the reinforcing structure 3 is higher than the gravity center of the photovoltaic module assembly 2, which can effectively enhance the structural strength of the photovoltaic module assembly 2, prevent the photovoltaic module assembly 2 from tilting, and reduce the weight of the reinforcing structure 3, and ensure that the packaging assembly 100 can be loaded into the container, thereby simplifying the assembly, disassembly and transport of the photovoltaic module assembly 2 and reducing costs.

In some embodiments of the present disclosure, referring to FIGS. 8 to 10, the two outermost photovoltaic modules in the photovoltaic module assembly 2 are a first photovoltaic module and a second photovoltaic module respectively, and the front surface of the first photovoltaic module and the front surface of the second photovoltaic module face each other. For example, when the photovoltaic module 21 is a single-glass module, the photovoltaic module assembly 2 can be arranged in this way. For example, when packaging the photovoltaic modules 21, the long sides of the photovoltaic modules 21 can be arranged vertically or nearly vertically, the short sides of the photovoltaic modules 21 is in contact with tray 1, and the short sides of the photovoltaic modules 21 are parallel or nearly parallel to the corresponding edge of the tray 1 and are stacked neatly. At the same time, there is no obvious gap between the two adjacent photovoltaic modules 21. The photovoltaic modules 21 are generally stacked in a same direction, one of the first photovoltaic module and the second photovoltaic module are turned over in the stacking direction, so that a backplate of the first photovoltaic module and a backplate of the second photovoltaic module face outward. A plurality of photovoltaic modules 21 between the first photovoltaic module and the second photovoltaic module are orientated in the same direction as that of the first photovoltaic module or the second photovoltaic module. Therefore, through the above settings, it is convenient for the photovoltaic module 21 to be packaged through the packaging belt and avoid scratching the coating layer of the front glass caused by the packaging belt hitting the front glass. Moreover, it is convenient to pack the reinforcing structure 3 and prevent an uneven stress from causing scratches on the front glass of the photovoltaic module 21 or from causing the front glass of the photovoltaic module 21 to be broken. In addition, it can also prevent the anti-tilting adhesive tape from contacting the front glass, so as to avoid glue residue on the glass surface.

In some embodiments of the present disclosure, when the photovoltaic module 21 is a double-glass module, the front surfaces of the plurality of photovoltaic modules 21 are stacked with all of the plurality of photovoltaic modules 21 being orientated in the same direction. In this way, abrasion is not easy to be generated between two adjacent photovoltaic modules 21, and thus the two adjacent photovoltaic modules 21 are not likely to be damaged. In addition, it is convenient for operators to stack the photovoltaic modules 21, which improves the assembly efficiency of the packaging assembly 100.

It should be noted that when the photovoltaic module 21 is a single-glass module, the front surface of the photovoltaic module 21 can be a light-receiving surface of the photovoltaic module 21. When the photovoltaic module 21 is a double-glass module, the front surface of the photovoltaic module 21 can be a main light-receiving surface of the photovoltaic module 21.

In an embodiment of the present disclosure, as shown in FIGS. 1 to 8, the packaging assembly 100 further includes a packaging box 6 including an enclosure 61. The enclosure surrounds an outer peripheral side of the photovoltaic module assembly 2, and covers at least a part of the photovoltaic module assembly 2 in the height direction of the photovoltaic module assembly 2, and the reinforcing structure 3 is located on the outer peripheral side of the enclosure 61. Therefore, the enclosure 61 can surround the outer peripheral surface of the photovoltaic module assembly 2, which can effectively protect the outer peripheral surface of the plurality of photovoltaic modules 21 and prevent the plurality of photovoltaic modules 21 from being damaged during installation, disassembly and transport of the photovoltaic module assembly 2. Moreover, by setting the enclosure 61 to cover at least a part of the photovoltaic module assembly 2 in the height direction of the photovoltaic module assembly 2, it can prevent the photovoltaic module assembly 2 from tilting to a certain extent. At the same time, the enclosure 61 also has the function of isolating water vapor, which can effectively ensure the normal use of the photovoltaic modules 21.

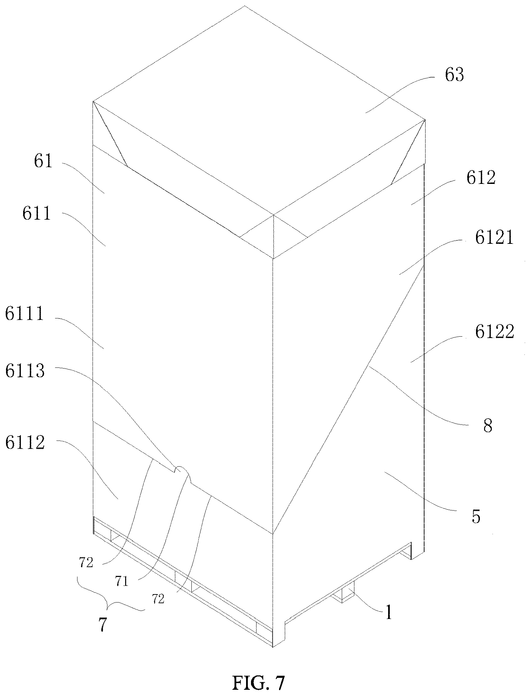

Further, in combination with FIGS. 7 to 9, the enclosure 61 includes a plurality of sidewalls. FIG. 1 to FIG. 9 show an enclosure 61 including four sidewalls for the purpose of illustration. However, it is obvious that ordinary technicians, after reading the technical solution of the present application, can understand that the solution can be applied to three, five or more sidewalls, which also falls within the scope of protection of the present disclosure.

The plurality of sidewalls are sequentially connected in an end-to-end way along the outer peripheral side of the photovoltaic module assembly 2 to form a hollow enclosure 61 with open upper and lower ends, so that the packaging box 6 can package the photovoltaic module assembly 2 for transportation. At least one of the plurality of sidewalls is a first sidewall 611. The first sidewall 611 has a first folding line 7 dividing the first sidewall 611 into a first sidewall part 6111 and a second sidewall part 6112 located below the first sidewall part 6111. The first sidewall part 6111 is foldable and/or tearable relative to the second sidewall part 6112, to facilitate the removal of the photovoltaic modules 21 packaged in the packaging box 6.

Optionally, the first folding line 7 can be formed by forming a dotted line-type indentation or a solid line-type indentation on the first sidewall 611, so that an operator can fold and/or tear the first sidewall part 6111 along the first folding line 7. Here, it should be noted that the first folding line 7 can also be realized in other ways, as long as it is convenient for operators to fold or tear the first sidewall part 6111 along the folding line.

When the operator takes out the photovoltaic modules 21 from the packaging box 6, the first sidewall part 6111 can only be turned outward relative to the second sidewall part 6112. At this time, the first sidewall part 6111 and the second sidewall part 6112 are always connected. Or the first sidewall part 6111 can be pulled and teared relative to the second sidewall part 6112. At this time, the first sidewall part 6111 is separated from the second sidewall part 6112. Or, a part of the first sidewall part 6111 is folded relative to the second sidewall part 6112, and another part of the first sidewall part 6111 is pulled and teared relative to the second sidewall part 6112. At this time, the first sidewall part 6111 and the second sidewall part 6112 are partially connected. It can be understood that the operator can selectively fold and/or tear the first sidewall part 6111 relative to the second sidewall part 6112 according to the actual operation requirements, so as to take out the photovoltaic modules 21.

For example, the enclosure 61 including four sidewalls shown in FIGS.1 to 8 is taken as an example. The enclosure 61 surrounds a plurality of photovoltaic modules 21 that are arranged in a vertical direction and are stacked side by side. The enclosure 61 and the photovoltaic module assembly 2 can be tightly fastened without gaps to prevent the photovoltaic module assembly 2 from shaking and tilting relative to the enclosure 61.

The four sidewalls can form an integrally formed part, which can reduce the manufacturing steps of the entire packaging box 6 and improve the manufacturing efficiency. In addition, the packaging steps of the photovoltaic modules 21 are reduced, thus saving labor costs. Or, two of the four sidewalls can form an integrally formed part, and the other two can form an integrally formed part; Or, three of the four sidewalls can form an integrally molded part. Of course, each two adjacent sidewalls can be detachably connected by a velcro, a double-sided adhesive tape or nails. The first sidewall 611 of the enclosure 61 can be arranged to face one of the outer side surfaces of the photovoltaic module assembly 2. When multiple photovoltaic modules 21 need to be taken out of the packaging box 6, the first sidewall part 6111 can be folded and/or pulled and teared, along the first folding line 7, relative to the second sidewall part 6112 to expose a part of each photovoltaic module 21 in the height direction thereof, so that each photovoltaic module 21 can be easily taken out.

In some optional embodiments of the present disclosure, referring to FIGS. 1 to 6, the first folding line 7 is located between the two first reinforcing bars 311 of the two first reinforcing structures 31. In this way, it is not necessary to disassemble the first reinforcing structure 31 when disassembling the photovoltaic module assembly 2, but only needs to simply fold and/or tear the first sidewall part 6111 relative to the second sidewall part 6112 along the first folding line 7 to easily take out each photovoltaic module 21. In this way, the first reinforcing structure 31 can achieve a better anti-tilting effect on the photovoltaic modules 21 when disassembling the photovoltaic modules 21.

Further, in combination with FIGS. 1 to 6, the upper end surfaces of the two first reinforcing bars 311 of the two first reinforcing structures 31 are flush with each other, and the first folding line 7 is flush with the upper end surfaces of the two first reinforcing bars 311. In this way, when the photovoltaic modules 21 are disassembled, the first folding line 7 will not interfere with the two first reinforcing bars 311 in the height direction of the photovoltaic modules 21, so that the first sidewall part 6111 can be more conveniently folded and/or teared relative to the second sidewall part 6112 along the first folding line 7.

In some embodiments of the present disclosure, referring to FIGS. 7 and 8, at least one of the plurality of sidewalls is a second sidewall 612. The second sidewall 612 is connected with the first sidewall 611. The second sidewall 612 has a second folding line 8. The second folding line 8 divides the second sidewall 612 into a third sidewall part 6121 and a fourth sidewall part 6122 located below the third sidewall part 6121. The third sidewall part 6121 is foldable and/or tearable relative to the fourth sidewall part 6122. One end of the second folding line 8 is connected with a corresponding end of the first folding line 7, and the other end of the second folding line 8 faces the upper end of the corresponding second reinforcing bar 312.

Therefore, by setting the second folding line 8 above, when multiple photovoltaic modules 21 need to be taken out of the packaging box 6, the first sidewall part 6111 can be folded and/or teared relative to the second sidewall part 6112 along the first folding line 7, and the third sidewall part 6121 can be folded and/or teared relative to the fourth sidewall part 6122 along the second folding line 8, so that at least two side surfaces of the multiple photovoltaic modules 21 can be exposed, thereby making the removal of the photovoltaic modules 21 more convenient and quickly. Moreover, since the two ends of the second folding line 8 face the first folding line 7 and the upper end of the second reinforcing bar 312 respectively, the second folding line 8 will not interfere with the two second reinforcing bars 312 in the height direction of the photovoltaic modules 21 during disassembly, thereby further facilitating taking out the photovoltaic modules 21.

In some optional embodiments of the present disclosure, in combination with FIGS. 7 and 8, two second sidewalls 612 can be included. The two second sidewalls 612 are connected at both sides of the first sidewall 611, and each second sidewall 612 has a second folding line 8. In this way, when the first sidewall part 6111 is folded and/or teared relative to the second sidewall part 6112 along the first folding line 7, and the third sidewall part 6121 is folded and/or teared relative to the fourth sidewall part 6122 along the second folding line 8, at least three side surfaces of the plurality of photovoltaic modules 21 can be exposed, thus making the disassembly of the plurality of photovoltaic modules 21 more convenient.

In some embodiments of the present disclosure, referring to FIGS. 7 and 8, the second sidewall part 6112 has a convex part 6113 protruding toward the first sidewall part 6111. In this way, the first sidewall part 6111 and the second sidewall part 6112 can be separated by pressing the convex part 6113, which is more convenient to operate.

In some specific embodiments of the present disclosure, as shown in FIGS. 7 and 8, the first folding line 7 includes a convex segment 71 and two straight segments 72. The two straight segments 72 are connected at both ends of the convex segment 71. The convex segment 71 forms an edge of the convex part 6113. The convex segment 71 is a curved-line or broken-line segment. For example, in the examples of FIGS. 7 and 8, the convex segment 71 is generally arc-shaped. In this way, when performing disassembly, the operator can press the convex part 6113 with his fingers to separate the first sidewall part 6111 and the second sidewall part 6112 along the convex part 71, and then separate, along the straight segment 72, the first sidewall part 6111 from the second sidewall part 6112 from one end of the straight segment 72 that is connected with the convex segment 71 towards the other end of the straight segment, which can effectively improve the disassembling efficiency.

In some embodiments of the present disclosure, as shown in FIGS. 6 to 8 and 11, the packaging box 6 further includes a bottom plate 62 and a top cover 63. The bottom plate 62 is connected with a lower end of the enclosure 61, and is fixedly connected with the tray 1. The top cover 63 is arranged on a top of the photovoltaic module assembly 2. The top cover 63, the bottom plate 62 and the enclosure 61 jointly cover an outer surface of the photovoltaic module assembly 2. For example, in the example of FIGS. 6 to 8, a size of the bottom plate 62 can be roughly equal to a size of the upper surface of the tray 1, and the bottom plate 62 can be provided with adhesive parts (such as double-sided adhesive tape, etc.) thereon to achieve the fixed connection of the bottom plate 62 and the tray 1, and to avoid the relative movement of the bottom plate 62 and the tray 1. Therefore, by setting the above bottom plate 62 and top cover 63, the packaging box 6 can cover the entire outer surface of the photovoltaic module assembly 2, thus effectively protecting the entire outer surface of the photovoltaic module assembly 2, and preventing the photovoltaic module assembly 2 from being damaged during assembly, disassembly and transport of the photovoltaic module assembly 2.

Optionally, the side surfaces of a plurality of photovoltaic modules 21 can be fixedly connected by adhesive tapes. For example, the plurality of photovoltaic modules 21 can be pasted with anti-tilting tapes on the side surfaces thereof. In this way, the plurality of photovoltaic modules 21 can be connected into an integrated structure, effectively preventing the plurality of photovoltaic modules 21 from tipping during transportation, and avoiding collision between two adjacent photovoltaic modules 21, ensuring the structural stability of the packaging assembly 100.

In some embodiments of the present disclosure, each photovoltaic module 21 includes a junction box (not shown in the figures). The junction box includes a junction box body and a cable. One end of the cable extends out of the junction box body, and one end of the cable has a cable terminal. The cable terminal faces the tray 1. Therefore, when the enclosure 61 covers the lower part of the photovoltaic module assembly 2, the cable terminal can be encapsulated in the enclosure 61 because the cable terminal faces the tray 1. Since the enclosure 61 can effectively prevent water vapor from entering the photovoltaic module assembly 2, failure of the cable terminal can be avoided and the photovoltaic module 21 can have a long service life.

In some embodiments of the present disclosure, in combination with FIGS. 1 to 9, the outer surface of the packaging assembly 100 is surrounded by a plurality of first packaging belts 9, and the outer surface of the photovoltaic module assembly 2 is surrounded by a plurality of second packaging belts 12. Therefore, by setting the plurality of first packaging belts 9 and the plurality of second packaging belts 12, the plurality of second packaging belts 12 can fix the plurality of photovoltaic modules 21 of the photovoltaic module assembly 2 together, so that the plurality of photovoltaic modules 21 can be packaged into an integrated structure. The plurality of first packaging belts 9 can fix the reinforcing structure 3, the packaging box 6 and the photovoltaic module assembly 2 together, so that relative movement of the plurality of photovoltaic modules 21 of the photovoltaic module assembly 2 is not easy to occur during assembly and transportation of the plurality of photovoltaic modules 21, which can improve packaging efficiency and effectively prevent damage to the plurality of photovoltaic modules 21.

Optionally, in combination with FIGS. 1 to 4, the plurality of first packaging belts 9 include a plurality of transverse packaging belts 91 which are provided on the outer peripheral side of the reinforcing structure 3 and are spaced apart from each other along the height direction of the photovoltaic module assembly 2. For example, in combination with FIG. 3 and FIG. 8, the plurality of first packaging belts 9 can further include a plurality of longitudinal packaging belts that are provided on an outer peripheral side of the packaging box 6 and are spaced apart from each other along the short side direction of the photovoltaic modules 21 to achieve close contact between the packaging box 6 and the photovoltaic module assembly 2. Therefore, by setting the above-mentioned transverse packing belts 91, the reinforcing structure 3 and the photovoltaic module assembly 2 can be bound together, so that a seamless contact between the reinforcing structure 3 and the packaging box 6 can be achieved. On one hand, the reinforcing structure 3, the packaging box 6 and the tray 1 can be formed as a whole, avoiding the shaking of the photovoltaic module assembly 2 relative to the reinforcing structure 3 during the transportation, ensuring the transportation stability of the photovoltaic module assembly 2, and achieving a better anti-tilting effect. On the other hand, it can reduce the size of the entire packaging assembly 100 and increase the container utilization rate.

For example, in the example of FIGS. 1 to 4, the plurality of transverse packaging belts 91 may include at least one first sub-packaging belt 911 and at least one second sub-packaging belt 912. The first sub-packaging belt 911 is set at the outer peripheral side of the two first reinforcing structures 31, and the second sub-packaging belt 912 is set at the outer peripheral side of the two second reinforcing structures 32. In this way, the first sub-packaging belt 911 can pack the two first reinforcing bars 311, the two second reinforcing bars 312 and the photovoltaic module assembly 2 together, and the second sub-packaging belt 912 can pack the two third reinforcing bars 313, the two fourth reinforcing bars 321 and the photovoltaic module assembly 2 together, so that the photovoltaic module assembly 2 and reinforcing structure 3 can be packaged into an integrated structure, thereby further improving the transport stability of the photovoltaic module assembly 2.

Referring to FIGS. 1 to 11, the specific packaging process of the packaging assembly 100 according to the embodiment of the present disclosure is as follows. At a first step, a plurality of photovoltaic modules are stacked. Specifically, a plurality of photovoltaic modules 21 of the photovoltaic module assembly 2 are placed on the tray 1. For example, the plurality of photovoltaic modules 21 can be stacked on tray 1 in the vertical direction. Next, the plurality of photovoltaic modules 21 are packed with a second packaging belt 12. Then, the packaged photovoltaic module assembly 2 are turned to be placed on the tray 1 with the longitudinal sides thereof extending in the vertical direction. At this time, the tray 1 is fixed with the bottom plate 62. Alternatively, the photovoltaic modules 21 are stacked neatly in the vertical direction by an equipment mechanical arm, until a fixed number of photovoltaic modules 21 are stacked. In the process of stacking the modules, a turnover trolley with a certain tilt angle and a side protection can be used to place the tray 1 with the bottom plate 62 on the trolley, which makes it easier to realize that the modules are stacked neatly without gaps and are not easy to tilt. After stacking, these photovoltaic modules can be packed on the turnover trolley.

At a second step, the packing box 6 is installed. The enclosure 61 is installed in the up-to-down direction, to cover the outer peripheral side of the photovoltaic module assembly 2 extending vertically, and the top cover 63 is disposed to cover the top of the photovoltaic module assembly 2.

At a third step, the reinforcing structure 3 is installed. The lower ends of the two first reinforcing structures 31 is connected with the tray 1, and then two first sub-packaging belts 911 are disposed on the outer peripheral sides of the two first reinforcing structures 31 to achieve the fixation of the first reinforcing structures 31 and the enclosure 61. Next, two second reinforcing structures 32 are installed above the two first reinforcing structures 31, and two second sub-packing belts 912 are arranged on the outer peripheral sides of the two second reinforcing structures 32 to achieve the fixation of the second reinforcing structures 32 and the enclosure 61. According to FIG. 2, the lower ends of the two first reinforcing bars 311 and the two second reinforcing bars 312 of the two first reinforcing structures 31 can be fixedly connected with the tray foot pier 11 through nails 13.

At a fourth step, two longitudinal packaging belts are used to surround all sidewalls of the packaging box 6 to pack the photovoltaic module assembly 2 and packaging box 6 together.

Finally, a film is wrapped around the photovoltaic module assembly 2 and the packaging box 6, so as to facilitate fixation of the photovoltaic module assembly 2 and the packaging box 6 and prevent water vapor from entering therein.

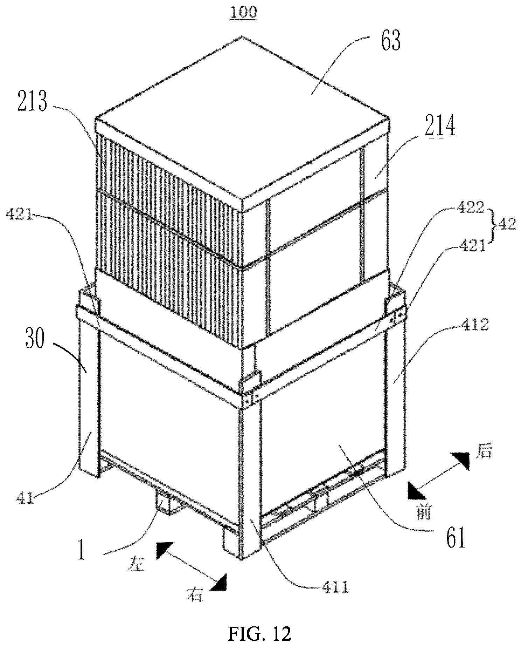

According to some other embodiments of the present disclosure, referring to FIGS. 12 to 17, the photovoltaic module assembly 2 is formed as a cuboid structure and includes two first sidewalls 213 and two second sidewalls 214. The two first sidewalls 213 are opposite to each other, and the two second sidewalls 214 are opposite to each other. The packaging assembly 100 further includes a reinforcing device 30 located on an outer peripheral side of the photovoltaic module assembly 2. The reinforcing device 30 includes four first reinforcing bars 41 and a plurality of second reinforcing bars 42. The four first reinforcing bars 41 are respectively located at four edges of the photovoltaic module assembly 2, and the lower ends of the four first reinforcing bars 41 are connected with the tray 1. The second reinforcing bar 42 is connected between two adjacent first reinforcing bars 41. For example, the bottom of the tray 1 can be provided with a plurality of tray foot piers 11, and the lower end of each first reinforcing bar 41 can be connected with corresponding tray foot piers 11, for example, through threaded fasteners. Therefore, by setting four first reinforcing bars 41 at the four edges of the photovoltaic module assembly 2 respectively, the first reinforcing bars 41 can protect the edges of the photovoltaic module assembly 2 and avoid damage to the photovoltaic module assembly 2 during transportation. In addition, by setting the second reinforcing bars 42, the structural strength of the reinforcing device 30 can be effectively improved, the overall structure of the reinforcing device 30 can be stable, and the stability of the photovoltaic module assembly 2 can be guaranteed, thus effectively preventing the tilt and collapse of the photovoltaic module assembly 2.

The plurality of second reinforcing bars 42 include at least one first sub-bar 421. The first sub-bar 421 includes a body 4211 and two connecting parts 4212. The two connecting parts are respectively connected at both ends of the body 4211, so that the first sub-bar 421 can form an approximate "U" structure. The body 4211 is located between two adjacent first reinforcing bars 41 (such as the upper ends of the two first reinforcing bars 41) and faces the first sidewall 213. The two connecting parts 4212 faces two second sidewalls 214 respectively, and the first sub-bar 421 is connected with the corresponding two first reinforcing bars 41 through two connecting parts 4212.

For example, in the example of FIGS. 12 to 15, during installation, a threaded fastener (not shown in the figures), such as a screw, can pass through the connecting part 4212 to be in a threaded connection with a corresponding first reinforcing bar 41, and the threaded fastener can be installed in the direction perpendicular to the second sidewall 214 without occupying the space of the body 4211. Therefore, by setting the above-mentioned body 4211 and two connecting parts 4212, a connection between the first sub-bar 421 and the first reinforcing bar 41 can be realized through two connecting parts 4212, any installation position is not needed to be reserved on the body 4211, and the size of the entire packaging assembly 100 in the direction perpendicular to the first sidewall 213 can be minimized, so that the horizontal size of the photovoltaic module assembly 2 is relatively small. In this way, it can reduce the horizontal space occupied by photovoltaic module assembly 2 in the container during transportation, effectively improve the loading rate of the photovoltaic modules 21, and thus reduce the transportation cost of the photovoltaic modules 21. Therefore, with the solution in which the first sub-bar 421 includes the body 4211 and two connecting parts 4212 connected at both ends of the body 4211, the body 4211 is located between the two adjacent first reinforcing bars 41 and faces the first sidewall 213, and the two connecting parts 4212 face the two second sidewalls respectively, the connection of the first sub-bar 421 and a corresponding first reinforcing bar 41 can be realized through two connecting parts 4212, effectively preventing tilt and collapse of the photovoltaic module assembly 2, effectively reducing the space occupied by the entire packaging assembly 100 in the direction perpendicular to the first sidewall 213. Therefore, more photovoltaic modules 21 can be accommodated in the container, thus effectively reducing the transportation cost of the photovoltaic modules 21.

In some optional embodiments of the present disclosure, referring to FIGS. 12 to 17, each connecting part 4212 can be perpendicular to the body 4211. For example, in the example of FIGS. 12 to 17, the photovoltaic module assembly 2 can be formed as a cuboid structure. The first sidewall 213 is perpendicular to the second sidewall 214. The body 4211 faces the first sidewall 213 and is parallel to the first sidewall 213. The two connecting parts 4212 face corresponding second sidewalls 214 respectively, and each connecting part 4212 is parallel to a corresponding second sidewall 214. Therefore, by making the connecting part 4212 perpendicular to the body 4211, the occupied space of the connecting part 4212 in the direction parallel to the body 4211 can be reduced, thus the occupied space of the connecting part 4212 in the direction perpendicular to the second sidewall can be reduced, the loading rate of the photovoltaic modules 21 can be further improved, and the transportation cost can be reduced. In addition, the connecting part 4212 so arranged can improve the structural strength of the whole first sub-bar 421, so that the first sub-bar 421 can bear a greater force, which can better play a reinforcement role, and further prevent the tilt and collapse of the photovoltaic module assembly 2.

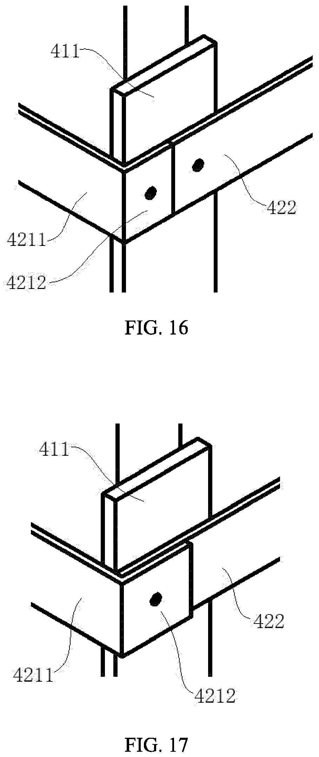

In some optional embodiments of the present disclosure, in combination with FIGS. 12 and 17, two first sub-bars 421 can be included. Each first sub-bar 421 is roughly U-shaped. The bodies 4211 of the two first sub-bars 421 face the two first sidewalls 213 respectively. The two connecting parts 4212 of each first sub-bar 421 face the two second sidewalls 214 respectively. Therefore, by setting the two first sub-bars 421 above, the two first sub-bars 421 can play an effective limit stop role to prevent multiple photovoltaic modules 21 from tilting towards the direction of the first sub-bar 421. Moreover, by making the bodies 4211 of the two first sub-bars 421 face the two first sidewalls 213, the bodies 4211 of the two first sub-bars 421 can be opposite to each other. Since no installation position is needed to reserved on the bodies 4211 of the two first sub-bars 421, the space occupied by the packaging assembly 100 in the direction perpendicular to the first sidewall 213 can be further reduced, and the loading rate of the photovoltaic modules 21 can be further improved, and thus the transportation cost of the photovoltaic modules 21 can be effectively reduced.

In some optional embodiments of the present disclosure, referring to FIGS. 12 to 17, a plurality of second reinforcing bars 42 include at least one second sub-bar 422 which faces the second sidewall. For example, in the example of FIGS. 12 to 17, the second sub-bar 422 can be formed as a plate structure. Therefore, by setting the second sub-bar 422 above, the structural strength of the entire reinforcing device 30 can be effectively improved, so that the reinforcing device 30 can play a better reinforcing role, thus can effectively prevent the tilt and collapse of the photovoltaic module assembly 2.

At least one end of a second sub-bar 422 and a free end of a corresponding connecting part 4212 of a first sub-bar 421 that is adjacent to the second sub-bar 422 face each other in the circumferential direction of the photovoltaic module assembly 2.

For example, in the example of FIGS. 12 to 14, two second sub-bars 422 are included. The two second sub-bars 422 face two second sidewalls 214 respectively. Both ends of each second sub-bar 422 in an length direction thereof respectively face the free ends of the corresponding connecting parts 4212 of the first sub-bars 421 that are adjacent to the both ends of the second sub-bar 422. In this way, the thickness of the end of the second sub-bar 422 and of the free end of the connecting part 4212 in the direction perpendicular to the second sidewall 214 is smaller, which can reduce the size of the entire packaging assembly 100 in the direction perpendicular to the second sidewall 214, and ensure a higher loading rate of the photovoltaic modules 21.

Of course, the present disclosure is not limited to any of the above examples. At least one end of the second sub-bar 422 overlaps, in the thickness direction of the second sub-bar 422, with the free end of the corresponding connecting part 4212 of the first sub-bar 421 adjacent to the second sub-bar 422. For example, in the example of FIG. 17, the connecting part 4212 is located at a side of the at least one end of the second sub-bar 422 that is far from the center of the photovoltaic module assembly 2. This arrangement can effectively improve the connection strength at the connection of the first sub-bar 421, the second sub-bar 422 and the first reinforcing bar 41, thereby improving the reinforcement effect of the entire reinforcing device 30, better preventing tilt and collapse of the photovoltaic module assembly 2, and ensuring the transport stability of the photovoltaic modules 21. In addition, the overlapping part of the second sub-bar 422 and the connecting part 4212 can be placed in a position where the container has a residual empty space, such as a position in the width direction of the container, so as to ensure the loading rate of the photovoltaic modules 21 and reduce the transportation cost. In addition, the second sub-bar 422 and the connecting part 4212 that overlap with each other can be installed with only one fastener, such as a threaded fastener, thereby simplifying the installation operation.

It should be noted that when at least one end of a second sub-bar 422 and a free end of a corresponding connecting part 4212 of a first sub-bar 421 adjacent to the second sub-bar 422 faces each other in the circumferential direction of the photovoltaic module assembly 2, the second sub-bar 422 and the connecting part 4212 do not overlap in the thickness direction thereof. At this time, the at least one end of the second sub-bar 422 and the free end of the corresponding connecting part 4212 can be completely face each other in the circumferential direction of the photovoltaic module assembly 2 (as shown in FIG. 16), or the at least one end of the second sub-bar 422 and the free end of the corresponding connecting part 4212 are partially staggered in the up-and-down direction (not shown in the figures). The end surface of the second sub-bar 422 and the end surface of the free end of the connecting part 4212 can be in contact with each other (as shown in FIG. 16) or be separated from each other (not shown in the figures).

Therefore, when one end of the second sub-bar 422 and an free end of the connecting part 4212 face each other, the thickness of the end of the second sub-bar 422 and of the free end of the connecting part 4212 in the direction perpendicular to the second sidewall is smaller, which can reduce the size of the entire packaging assembly 100 in the direction perpendicular to the second sidewall, and ensure a high loading rate of the photovoltaic modules 21. When the end of the second sub-bar 422 and the free end of the connecting part 4212 overlap along the thickness direction of the second sub-bar 422, the second sub-bar 422 and the connecting part 4212 have a higher connection strength, which can improve the reinforcement effect of the entire reinforing device 30, better prevent tilt and collapse of the photovoltaic module assembly 2, and ensure the transportation stability of the photovoltaic modules 21. At this time, the overlapping part of the second sub-bar 422 and the connecting part 4212 can be placed in a position where the container has a residual empty space, such as a position in the width direction of the container, so as to ensure the loading rate of the photovoltaic modules 21 and reduce the transportation cost. In addition, the second sub-bar 422 and the connecting part 4212 that overlap with each other can be installed with only one fastener, such as a threaded fastener, thereby simplifying the installation operation.

It can be understood that when only one second sub-bar 422 is included, both ends of the second sub-bar 422 face respectively the free ends of corresponding connecting parts 4212 in the circumferential direction of the photovoltaic module assembly 2. Or, both ends of the second sub-bar 422 overlap with the free ends of corresponding connecting parts 4212 in the thickness direction of the second sub-bar 422. Or, one end of the second sub-bar 422 and a free end of a corresponding connecting part 4212 face each other in the circumferential direction of the photovoltaic module assembly 2, and the other end of the second sub-bar 422 and a free end of a corresponding connecting part 4212 overlap with each other in the thickness direction of the second sub-bar 422.

When multiple second sub-bars 422 are included, both ends of each second sub-bar 422 and free ends of corresponding connecting parts 4212 can be connected in the same way. In this case, both ends of each of all second sub-bars 422 and free ends of corresponding connecting parts 4212 face each other in the circumferential direction of the photovoltaic module assembly 2. Or, both ends of each of the second sub-bars 422 overlap with free ends of the corresponding connecting parts 4212 in the thickness direction of the second sub-bar 422. Or, both ends of a part of the second sub-bars 422 and free ends of corresponding connecting parts 4212 face each other in the circumferential direction of the photovoltaic module assembly 2, and both ends of the other part of the second sub-bars 422 and free ends of corresponding connecting parts4212 overlap in the thickness direction of the second sub-bar 422.

In another example, the two ends of at least one of the multiple second sub-bars 422 is connected with free ends of corresponding connecting parts 4212 in different ways. At this time, one end of each second sub-bar 422 faces a free end of a corresponding connecting part 4212 in the circumferential direction of the photovoltaic module assembly 2, and the other end of each second sub-bar 422 overlaps with a free end of a corresponding connecting part 4212 in the thickness direction of the second sub-bar 422. Alternatively, one end of each of some second sub-bars 422 of multiple second sub-bar 422 faces a free end of a corresponding connecting part 4212 in the circumferential direction of the photovoltaic module assembly 2, and the other end overlaps with a free end of a corresponding connecting part 4212 in the thickness direction of the second sub-bar 422, and two ends of the other part of the multiple second sub-bars 422 face or are parallel to free ends of the corresponding connecting parts 4212 in the circumferential direction of the photovoltaic module assembly 2 or overlap with free ends of corresponding connecting parts 4212 in the thickness direction of the second sub-bars 422.

Of course, the present disclosure is not limited to any of the above examples. At least one end of a second sub-bar 422 and a free end of a corresponding connecting part 4212 of the first sub-bar 421 adjacent to the second sub-bar 422 can be completely staggered in the circumferential direction of the photovoltaic module assembly 2 (not shown in the figure). The present disclosure is not limited to this.

In a further embodiment of the present disclosure, as shown in FIG. 17, when at least one end of the second sub-bar 422 overlaps, in the thickness direction of the second sub-bar 422, with a free end of a corresponding connecting part 4212 of the first sub-bar 421 adjacent to the second sub-bar 422, the connecting part 4212 is located at a side of the at least one end of the second sub-bar 422 that is far away from the center of the photovoltaic module assembly 2. For example, in the example of FIG. 17, the end of the second sub-bar 422 and the connecting part 4212 of the first sub-bar 421 are connected with the first reinforcing bar 41. Here, the end of the second sub-bar 422 is located between the connecting part 4212 of the first sub-bar 421 and the first reinforcing bar 41. Therefore, through the above arrangement, the connecting part 4212 can cover the at least one end of the second sub-bar 422, so that the second sub-bar 422 can extend along a straight line, thus improving the structural strength of the second sub-bar 422, allowing the second sub-bar 422 to bear a large force, and preventing tilt and collapse of the photovoltaic module assembly 2.

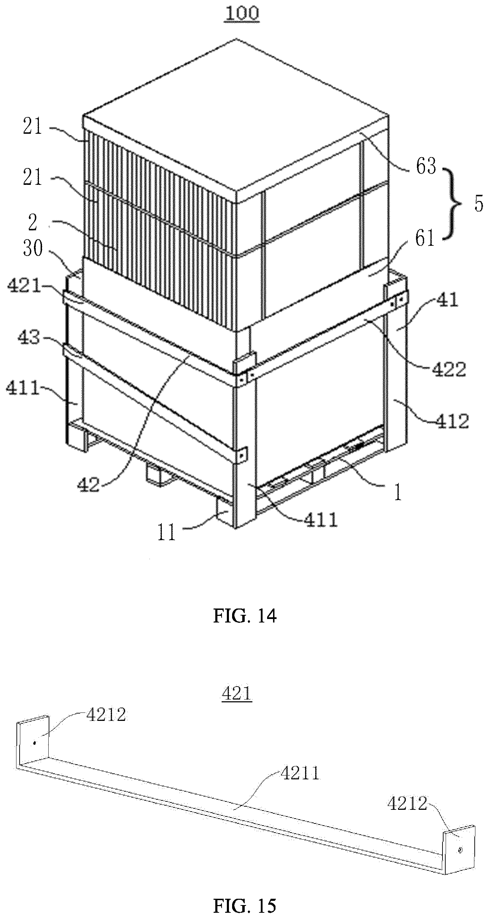

In some embodiments of the present disclosure, referring to FIG. 14, the reinforcing device 30 further includes at least one third reinforcing bar 43. The third reinforcing bar 43 is connected between two adjacent first reinforcing bars 41, and the third reinforcing bar 43 is located between the second reinforcing bar 42 and the tray 1. For example, in the example of FIG. 14, the third reinforcing bar 43 is located between the first sub-bar 421 and the tray 1. The structure of the third reinforcing bar 43 and the structure of the first sub-bar 421 can be the same. The third reinforcing bar 43 can include the first body and two first connecting parts. The two first connecting parts can be connected at both ends of the first body. The first body faces the first sidewall 213, and the two first connecting parts face the two second sidewalls respectively. The third reinforcing bar 43 is connected with corresponding two first reinforcing bars 41 through the two first connecting parts, In this way, the size of the packaging assembly 100 in the direction perpendicular to the first sidewall 213 can be minimized, and the loading rate of the photovoltaic modules 21 can be improved. Therefore, by setting the third reinforcement bar 43 above, the third reinforcement bar 43 can further improve the reinforcement effect of the reinforcing device 30, further prevent the collapse of the photovoltaic module assembly 2, and ensure the stability of the photovoltaic module assembly 2.

Optionally, in combination with FIG. 14, the third reinforcing bar 43 can be disposed horizontally or obliquely. For example, in the example of FIG. 14, the third reinforcing bar 43 is disposed obliquely. Therefore, when the third reinforcing bar 43 is disposed obliquely, a trapezoidal structure can be formed by the third reinforcing bar 43 and a corresponding second reinforcing bar 42 and two first reinforcing bars 41, which makes the structure of the reinforcing device 30 more stable. In this way, the reinforcing device 30 can bear a larger force and effectively prevent the photovoltaic modules 21 from tilting towards the third reinforcing bar 43. When the third reinforcing bar 43 is disposed horizontally, the length of the third reinforcing bar 43 can be shorter, the structure thereof is simpler, the installation thereof is convenient, and the cost can be reduced.

In some optional embodiments of the present disclosure, the second reinforcing bar 42 may be connected between the upper ends of two adjacent first reinforcing bars 41. In this way, the height of the second reinforcing bar 42 is relatively high, thus the second reinforcing bar 42 can define a large reinforcing space together with the two adjacent first reinforcing bars 41 and the tray 1, so as to play a better role in stopping and limiting the photovoltaic module assembly 2 and effectively prevent the photovoltaic module assembly 2 from tilting.

In some optional embodiments of the present disclosure, as shown in FIGS. 12 to 14, each second reinforcing bar 42 can be horizontally arranged. For example, in the example of FIG. 14, the upper ends of the four first reinforcing bars 41 are located in a same horizontal plane. Four second reinforcing bars 42 are included, and the four second reinforcing bars 42 are respectively connected between the upper ends of two adjacent first reinforcing bars 41. Therefore, by making the second reinforcing bars 42 horizontally arranged, the structures of the second reinforcing bars 42 are more simple and convenient for installation and disassembly while ensuring that the reinforcing device 30 has a good reinforcing effect.

Of course, the present disclosure is not limited to any of the above examples. In other optional embodiments of the present disclosure, the second reinforcing bar 42 can be disposed obliquely (not shown in the figures). It can be understood that the specific arrangement of the second reinforcing bars 42 can be determined according to the actual needs to better meet the actual application.

In some embodiments of the present disclosure, as shown in FIGS. 12 to 14, four first reinforcing bars 41 include at least one reinforcing plate-type bar 411. The reinforcing plate-type bar 411 faces the second sidewall, and the connecting part 4212 of the first sub-bar 421 is connected with the reinforcing plate-type bar 411. For example, in the example of FIGS. 12 to 14, the reinforcing plate-type bar 411 has a planar plate structure, and the reinforcing plate-type bar 411 extends in the up-and-down direction. Therefore, by setting the above-mentioned reinforcing plate-type bar 411, the reinforcing plate-type bar 411 is not needed to occupy the space of the photovoltaic module assembly 2 in the direction of the first sidewall 213. When disassembling the photovoltaic module assembly 2, it is only needed to remove the first sub-bar 421 to take out the the photovoltaic modules 21 from the reinforcing plate-type bars 411 along a direction parallel to the reinforcing plate-type bar 411. On one hand, it is convenient to disassemble the the photovoltaic modules 21. On the other hand, when disassembling the photovoltaic modules 21, it is possible to keep the original appearance of the reinforcement device 30 as much as possible, and thus the reinforcing device 30 can still play an effective reinforcement role during the disassembly, avoid the tilt and collapse of the photovoltaic modules 21 during the disassembly, and effectively improve the packaging safety of the photovoltaic modules 21.

In some embodiments of the present disclosure, referring to FIGS. 12 to 14, the plurality of photovoltaic modules 21 are arranged in sequence in a direction from one second sidewall to the other. Therefore, by arranging the photovoltaic modules 21 in this way, the reinforcing plate-type bar 411 can be located on one side in the thickness direction of the photovoltaic module 21. When performing disassembly, the photovoltaic modules 21 can be pulled out from the reinforcing plate-type bar 411 along a direction parallel to the second sidewall, which makes the disassembly of the photovoltaic modules 21 easier.

In some embodiments of the present disclosure, in combination with FIGS. 12 to 14, the four first reinforcing bars 41 include at least one reinforcing corner bar 412. The reinforcing corner bar 412 and the reinforcing plate-type bar 411 are respectively located at the two second sidewalls, and the back surface of each photovoltaic module 21 faces the reinforcing plate-type bar 411. For example, in the example of FIGS 12 to 14, the reinforcing corner bar 412 includes two reinforcing parts, both of which extend in the vertical direction, the two reinforcing parts are connected with each other and perpendicular to each other. One of the two reinforcing parts is connected with the body 4211, and the other of the two reinforcing parts is connected with the connecting part 4212.

Therefore, by setting the above-mentioned reinforcing corner bar 412, the reinforcing corner bar 412 can play a better role in supporting and protecting the edges of the photovoltaic module assembly 2, thus effectively preventing the photovoltaic module assembly 2 from being damaged during transportation, and improving the safety and reliability of the packaging. Moreover, when disassembling the photovoltaic modules 21, the reinforcing corner bar 412 can play a better role in bearing and strengthening the photovoltaic modules 21, effectively preventing the photovoltaic modules 21 from tilting and collapsing during the disassembly process. In addition, by making the back surface of the photovoltaic module 21 face the reinforcing plate-type bar 411, the photovoltaic modules 21 can be taken out by pulling the C side of the frame of the photovoltaic module from the reinforcing plate-type bar 411 when the photovoltaic modules 21 are disassembled, which makes the disassembly of the photovoltaic modules 21 more convenient and can effectively improve the disassembly efficiency.

For example, in the example of FIG. 12, three reinforcing corner bars 412 are included. Each reinforcing corner bar 412 includes two reinforcing parts, both of which extend along the up-and-down direction, the two reinforcing parts are connected with each other and perpendicular to each other. One of the two reinforcing parts can be engaged with the first sidewall 213, and the other of the two reinforcing parts can be engaged with the second sidewall 214.

In some optional embodiments of the present disclosure, each first reinforcing bar 41 has a thickness of $T_1$, and the second reinforcing bar 42 has a thickness of $T_2$, $T_1$ and $T_2$ respectively satisfying: $2mm \leq T_1 \leq 5mm$, $2mm \leq T_2 \leq 5mm$. In this way, both the thickness of the first reinforcing bar 41 and the thickness of the second reinforcing bar 42 are smaller, which can reduce the overall size of the packaging assembly 100 while ensuring that the first reinforcing bar 41 and the second reinforcing bar 42 play a better role in bearing and protecting the photovoltaic modules 21, thus effectively improving the loading rate of the photovoltaic module 21 and reducing the transportation cost.

Optionally, each first reinforcing bar 41 may be a steel plate, and each second reinforcing bar 42 may be a steel plate. For example, each first reinforcing bar 41 can be an ordinary steel plate or a rust-proof galvanized steel plate. Each second reinforcing bar 42 can be an ordinary steel plate or a rust-proof galvanized steel plate. Therefore, with the first reinforcing bar 41 and the second reinforcing bar 42 being steel plates, the first reinforcing bar 41 and the second reinforcing bar 42 have higher structural strength, which can effectively protect the photovoltaic modules 21 and prevent the photovoltaic modules 21 from tipping or damage. The thickness of the first reinforcing bar 41 and the thickness of the second reinforcing bar 42 can be relatively small, which can reduce the size of the packaging assembly 100 and make the packaging assembly 100 occupy less space, thereby effectively improve the loading rate of the photovoltaic modules 21. Of course, the first reinforcing bar 41 and the second reinforcing bar 42 can be made of other materials, which are not limited in the disclosure.

In some optional embodiments of the present disclosure, the height of tray 1 is $T_3$, where $T_3$ satisfies: $T_3 \leq 100mm$. In this way, the height of tray 1 is relatively low, which can allow the photovoltaic module assembly 2 to be loaded into the container more easily and quickly, and can reduce the height of the gravity center of the photovoltaic module assembly 2, thus further avoiding the tilt and collapse of the photovoltaic module assembly 2.

In some embodiments of the present disclosure, referring to FIGS. 12 to 14, the top surface of the reinforcing device 30 is located at at least the gravity center of the photovoltaic module assembly 2. The top surface of the reinforcing device 30 can be as high as the gravity center of the photovoltaic module assembly 2. Alternatively, the top surface of the reinforcing device 30 can be higher than the gravity center of the photovoltaic module assembly 2. Therefore, the reinforcing device 30 so arranged can play the role of load-bearing and reinforcement together with tray 1, thus further preventing tilt and collapse of the photovoltaic module assembly 2 and ensuring the stability of the photovoltaic module assembly 2.

In some embodiments of the present disclosure, the packaging assembly 100 further includes a packaging buffer 5, which is located between the photovoltaic module assembly 2 and the reinforcing device 30. The packaging buffer 5 covers at least a part of the photovoltaic module assembly 2 in the height direction of the photovoltaic module assembly 2. For example, in the example in FIGS. 12 to 14, the packaging buffer 5 includes an enclosure 61 and a top cover 63. The enclosure 61 covers at least a part of the photovoltaic module assembly 2 in the height direction of the photovoltaic module assembly 2. The top cover 63 is located on the top of the photovoltaic module assembly 2, and the top cover 63 can effectively protect the top of the photovoltaic module assembly 2 to prevent the top of the photovoltaic module assembly 2 from being damaged during assembly, disassembly and transportation.

Therefore, since the packaging buffer 5 can surround the outer peripheral surface of the photovoltaic module assembly 2, and the tray 1 is arranged at the bottom of the photovoltaic module assembly 2, it can effectively protect the outer peripheral surface and bottom of the multiple photovoltaic modules 21, and prevent the multiple photovoltaic modules 21 from being damaged during installation, disassembly and transportation. Moreover, by setting the packaging buffer 5 to cover at least a part of the photovoltaic module assembly 2 in the height direction of the photovoltaic module assembly 2, it can prevent the photovoltaic module assembly 2 from tipping to a certain extent, thus improving the reliability of transportation.

Optionally, the packaging buffer 5 can be a waterproof carton. In this way, the packaging buffer 5 can separate the photovoltaic module assembly 2 from the water vapor and prevent multiple photovoltaic modules 21 from being damaged by water vapor, thus effectively ensuring the normal use of the photovoltaic modules 21. Of course, the packaging buffer part 5 can be a packaging film, a foamed part or a foam part. This disclosure is not limited to any of the examples.

Optionally, referring to FIGS. 12 to 21, the front faces of the plurality of photovoltaic modules 21 are stacked in the same direction. For example, the plurality of photovoltaic modules 21 can be arranged in sequence along the thickness direction of the photovoltaic module 21, front surfaces of the plurality of photovoltaic modules 21 can all face the left side of the tray 3 in FIG. 12, and back surfaces of the plurality of photovoltaic modules 21 can all face the right side of the tray 3 in FIG. 12. Two adjacent photovoltaic modules 21 are not easy to be subject to abrasion and thus are not easy to be damaged, and it is convenient for operators to stack the photovoltaic modules 21, improving the assembly efficiency of the packaging assembly 100. When the photovoltaic module 21 is a single-glass module, the front surface of the photovoltaic module 21 can be a light-receiving surface of the photovoltaic module 21. When the photovoltaic module 21 is a double-glass module, the front surface of the photovoltaic module 21 can be a main light-receiving surface of the photovoltaic module 21.

The packaging assembly 100 further includes a reinforcing device 30, which is located on the tray 1. The reinforcing device 30 is located on the outer peripheral side of the photovoltaic module assembly 2. For example, in the example shown in FIGS. 12 to 21, the structural strength of the packaging assembly 100 can be effectively enhanced by setting the reinforcing device 30 on the outer peripheral side of the photovoltaic module assembly 2. At the same time, the reinforcing device 30 can play the role of load-bearing and reinforcement together with the tray 1, thus effectively preventing tilt and collapse of the photovoltaic modules 21 and ensuring the stability of the photovoltaic modules 21. Therefore, with the setting in which the above-mentioned tray 1 and reinforcing device 30 are arranged, the plurality of photovoltaic modules 21 stand upright on the tray 1, and the front surfaces of the plurality of photovoltaic modules 21 are stacked in the same direction, the photovoltaic modules 21 can be effectively prevented from tilting, and the horizontal occupation space of the photovoltaic module assembly 2 in the container can be reduced. The packaging assembly 100 can easily pass through the container door, thereby improving the transport efficiency and assembly efficiency of the packaging assembly 100.

According to some embodiments of the present disclosure, a length of the photovoltaic module 21 is L, and a width of the photovoltaic module 21 is W, where L and W meet the following requirements: $1.5 < L/W < 1.9$. When $L/W \leq 1.5$, the width of the photovoltaic module 21 is relatively large, and it may be inconvenient for the photovoltaic module 21 to enter and exit a container. When $L/W \geq 1.9$, the length of the photovoltaic module 21 is relatively large, which may affect the loading rate of the photovoltaic modules 21. Therefore, when L and W meet the requirements of $1.5 < L/W < 1.9$, it is convenient for the photovoltaic module 21 to enter and exit the container, ensuring the loading rate of the photovoltaic modules 21.

According to some embodiments of the present disclosure, the length of the photovoltaic module 21 is L, and the width of the photovoltaic module 21 is W, where L and W respectively meet the following requirements: $2000mm \leq L \leq 2400mm$, and $1100mm \leq W \leq 1500mm$. In this way, when L and W meet the requirements of $2000mm \leq L \leq 2400mm$ and $1100mm \leq W \leq 1500mm$ respectively, the size of the photovoltaic module 21 can be increased, so that large size cells can be set in the photovoltaic module 21, which can effectively improve the power of the photovoltaic module 21. At the same time, it can effectively use the container space, and ensure the operating space for packaging assembly 100 to enter and exit the container.

According to some embodiments of the present disclosure, the height of the packaging assembly 100 is H, where H meets the following requirements: 2100mm ≤ H ≤ 2520mm. When H<2100mm, the size of the photovoltaic module 21 is small, which causes that the photoelectric conversion efficiency of the photovoltaic module 21 is low, and it may not guarantee the power demand of users for the photovoltaic module 21. When H>2520mm, the height of packaging assembly 100 is larger, which reduces the operating space for packaging assembly 100 to enter and exit a container, and affects the convenience of packaging assembly 100 entering and exiting the container. Therefore, when H meets the requirements of 2100mm ≤ H ≤ 2520mm, it can effectively ensure the power and photoelectric conversion efficiency of the photovoltaic module 21, and also ensure the operating space for the packaging assembly 100 to enter and exit the container, so as to facilitate the packaging assembly 100 entering and exiting the container.

According to some embodiments of the present disclosure, the tray 1 is a rectangular tray, a side edge of the photovoltaic module assembly 2 is parallel to an edge of tray 1, and a distance between at least one side edge of the photovoltaic module assembly 2 and a corresponding edge of the tray 1 is d, where d satisfies 5mm≤d≤30mm. For example, it can make d satisfy d=10mm. Thus, the distance between the above-mentioned side edge of the photovoltaic module assembly 2 and the corresponding edge of tray 1 can be effectively reduced, thus the distance between the reinforcing device 30 and the photovoltaic module assembly 2 can be reduced, and the overall stability of the packaging assembly 100 can be improved.

When packaging the photovoltaic modules 21, a long side 211 of each photovoltaic module 21 can be vertically placed or approximately vertically placed. A short side 212 of each photovoltaic module 21 is in contact with the tray 1, and the short side 212 of the photovoltaic module 21 is parallel or approximately parallel to a corresponding edge of the tray 1. The photovoltaic modules are stacked neatly. At the same time, there is no obvious gap between two adjacent photovoltaic modules 21. The stacking direction of the photovoltaic module 21 is generally in one direction. In addition, frame surfaces of the two photovoltaic modules 21 located at the outermost side of the photovoltaic module assembly 2 face outward, which is convenient for the operators to pack the photovoltaic modules 21 with the packaging belts. The cable terminals of the junction box of the photovoltaic module 21 face toward the tray 1, so as to wrap the cable terminals in the enclosure 61. The enclosure 61 can effectively prevent water vapor from entering the photovoltaic module assembly 2, thus avoiding the failure of the junction box.

According to some embodiments of the present disclosure, the number of the photovoltaic modules 21 is N, where N meets the following requirements: 20 ≤ N ≤ 70. When the number of the photovoltaic modules 21 is 20, the overall size of the packaging assembly 100 is smaller, making the transport of the packaging assembly 100 more flexible. When the number of the photovoltaic modules 21 is 70, a large number of photovoltaic modules 21 can be transported at one time to improve the transport efficiency of packaging assembly 100.

According to some embodiments of the present disclosure, a height of the tray 1 is h, where h meets the following requirements: 80mm ≤ h ≤ 125mm. Therefore, by setting the height h of the tray 1 to meet the requirements of 80mm ≤ h ≤ 125mm, the overall height of the packaging assembly 100 can be effectively reduced, and the operating space for the packaging assembly 100 to enter and exit the container can be increased, which is convenient for the packaging assembly 100 to enter and exit the container.

Optionally, h can further meet the following requirements: h ≤ 100mm. By setting the height h of the ray 1 to h ≤ 100mm, when the photovoltaic module 21 is installed on the tray 1, the height of the tray for the photovoltaic module 21 can be further reduced, and the operating space for the photovoltaic module 21 to enter and exit the container can be further increased, making it more convenient for the photovoltaic module 21 to enter and exit the container.

According to some embodiments of the present disclosure, in combination with FIGS. 12 to 21, a distance between the top surface of the reinforcing device 30 and the tray 1 is di, and a distance between the top surface of the photovoltaic module assembly 2 and the tray 1 is $d_2$, where $d_1$ and $d_2$ meet the following requirements: $1/2d_2 \leq d_1 \leq 2/3d_2$. When $d_1 < 1/2d_2$, the height of the reinforcing device 30 is relatively low. When the photovoltaic module 21 is installed on the tray 3, the reinforcing device 30 may not be easy to ensure the stability of the photovoltaic module 21, and the photovoltaic module 21 is easy to topple over. When $d_1 > 2/3d_2$, although the structural strength of the packaging assembly 100 is effectively enhanced, the height of the reinforcing device 30 is higher, which makes the weight of the entire packaging assembly 100 heavier, thus affecting the assembly, disassembly and transport of the photovoltaic module 21. Therefore, by making $d_1$ and $d_2$ meet the requirements of $1/2d_2 \leq d_1 \leq 2/3d_2$, it can effectively ensure that the top surface of the reinforcing device 30 reaches the gravity center of the multiple photovoltaic modules 21 or is higher than the gravity center of the photovoltaic modules 21, which can effectively enhance the structural strength of the packaging assembly 100, prevent the collapse of the photovoltaic modules 21, and reduce the weight of the packaging assembly 100, so as to facilitate the assembly, disassembly and transport of the photovoltaic modules 21.

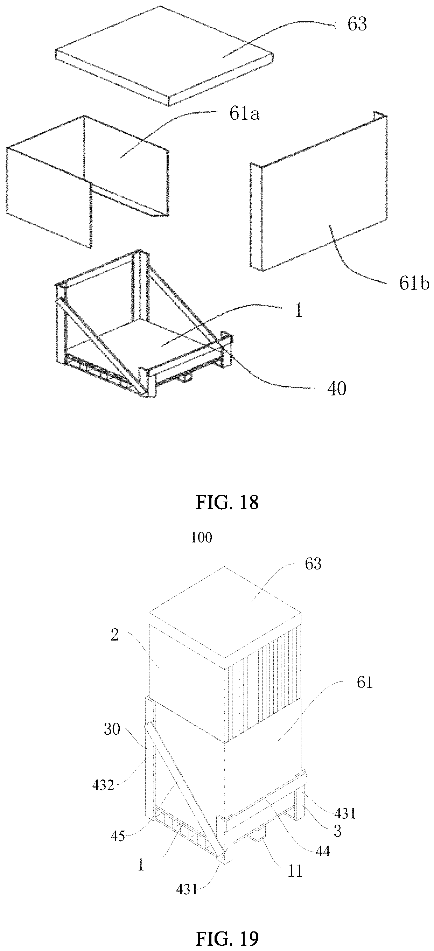

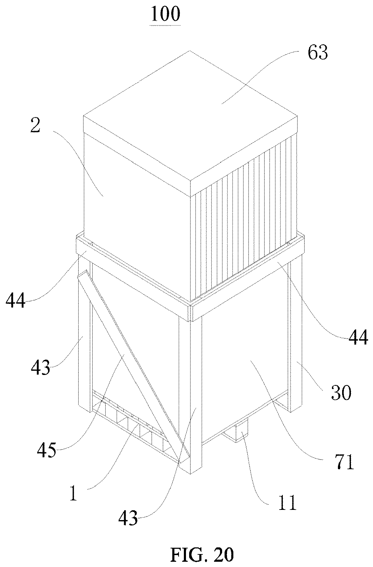

According to some specific embodiments of the present disclosure, referring to FIGS. 19 and 20, the reinforcing device 30 includes four third reinforcing bars 43, at least two fourth reinforcing bars 44 and at least two fifth reinforcing bars 45. The four third reinforcing bars 43 extend in the vertical direction. The four third reinforcing bars 43 are respectively located at the four edges of the photovoltaic module assembly 2, and the lower ends of the four third reinforcing bars 43 are connected with the tray 1. For example, the bottom of the tray 1 can be provided with multiple tray foot piers 11, and the lower end of each third reinforcing bar 43 is connected with a corresponding tray foot pier 11. Each fourth reinforcing bar 44 is connected between the upper ends of two adjacent third reinforcing bars 43. At least two fourth reinforcing bars 44 are located at a radially outer side of the photovoltaic module assembly 2. The upper end of each fifth reinforcing bar 45 is connected with the upper ends of the two adjacent third reinforcing bars 43, and the lower end of each fifth reinforcing bar 45 is connected with the lower ends of the two adjacent third reinforcing bars 43. At least two fifth reinforcing bars 45 are located at a radially outer side of the photovoltaic module assembly 2. Therefore, by setting four third reinforcing bars 43 at the four edges of the photovoltaic module assembly 2, the third reinforcing bars 43 can protect the edges of the photovoltaic module 21 and prevent the photovoltaic modules 21 from being damaged during transport. In addition, by setting the third reinforcing bars 43, the fourth reinforcing bars 44 and the fifth reinforcing bars 45, the structural strength of the reinforcing device 30 can be effectively improved, and the overall structure of the reinforcing device 30 can be stabilized, so that the lower structure of the entire packaging assembly 100 can be stabilized, and the stability of the photovoltaic modules 21 can be guaranteed, thus effectively preventing the collapse of the photovoltaic modules 21.

According to some optional embodiments of the present disclosure, as shown in FIG. 19, the four third reinforcing bars 43 include two first reinforcing sub-bars 431 and two second reinforcing sub-bars 432. Upper ends of the two first reinforcing sub-bars 431 are located below upper ends of the two second reinforcing sub-bars 432. At this time, the height of the first reinforcing sub-bar 431 is less than the height of the second reinforcing sub-bar 432, which is convenient for the disassembly of the packaging assembly 100. At the same time, it is convenient to take the photovoltaic module 21 out of the reinforcing device 30, and it can effectively reduce the material consumption of the second reinforcing sub-bar 432, and reduce the weight and cost of the reinforcing device 30. Two fourth reinforcing bars 44 are included. One of the two fourth reinforcing bars 44 is connected between the upper ends of the two first reinforcing bars 431, and the other of the two fourth reinforcing bars 44 is connected between the upper ends of the two second reinforcing bars 432. Two fifth reinforcing bars 45 are included. One of the two fifth reinforcing bars 45 is connected between one first reinforcing bar 431 and one second reinforcing bar 432 that are adjacent to each other, and the other of the two fifth reinforcing bars 45 is connected between another first reinforcing bar 431 and another second reinforcing bar 432 that are adjacent to each other. Therefore, the structural strength of the reinforcing device 30 can be effectively guaranteed.

According to other optional embodiments of the present disclosure, as shown in FIG. 20, the upper ends of the four third reinforcing bars 43 are located in a same horizontal plane. Four fourth reinforcing bars 44 are included, and the four fourth reinforcing bars 44 are respectively connected between the upper ends of the two adjacent third reinforcing bars 43. This setting can effectively improve the structural strength of the stiffening device 30. When the photovoltaic modules 21 are assembled into an accommodation space jointly defined by the reinforcing device 30 and the tray 1, it can also ensure the stability of the photovoltaic modules 21 and avoid the collapse of the photovoltaic modules 21.

In some optional embodiments, referring to FIGS. 19 and 20, two fifth reinforcing bars 45 are included. The two fifth reinforcing bars 45 are located at two opposite sides of the photovoltaic module assembly 2. In this way, the fifth reinforcing bars 45 can effectively support the two adjacent third reinforcing bars 43 and further ensure the structural strength of the reinforcing device 30.

Optionally, the third reinforcing bar 43, the fourth reinforcing bar 44 and the fifth reinforcing bar 45 can all be wooden bars. The wooden bars can enhance the structural strength of the reinforcing device 30. The cost of the wooden bars is low. The present disclosure is not limited to any of the examples.

According to some embodiments of the present disclosure, referring to FIGS. 12 to 21, the packaging assembly 100 further includes an enclosure 61 and a top cover 63. The enclosure 61 is disposed around an outer peripheral side of the photovoltaic module assembly 2, and the enclosure 61 covers at least a part of the photovoltaic module assembly 2 in the height direction of the photovoltaic module assembly 2. Referring to FIGS. 18 to 19, the enclosure 61 can include a first enclosure part 61a and a second enclosure part 61b which are connected circumferentially. The first enclosure part 61a is generally U-shaped. When the enclosure 61 is installed, the first enclosure part 61a can be set between the plurality of photovoltaic modules 21 and the reinforcing device 30, and then the second enclosure part 61b can be connected with the first enclosure part 61a, so that the enclosure 61 can surround the outer peripheral surface of the photovoltaic modules 21. The top cover 63 covers the top of the photovoltaic module assembly 2. In this way, the outer peripheral surface and the top of the plurality of photovoltaic modules 21 can be effectively protected to prevent the plurality of photovoltaic modules 21 from being damaged during installation, disassembly and transport. Moreover, by setting the enclosure 61 to cover at least a part of the photovoltaic module assembly 2 in the height direction, it can prevent the photovoltaic module assembly 2 from tilting to a certain extent. At the same time, the enclosure 61 also has the function of isolating water vapor, which can effectively ensure the normal use of the photovoltaic module 21. In addition, the top surface of the reinforcing device 30 and the top cover 63 are separated from each other, which can reduce the size of the reinforcing device 30, save the material of the reinforcing device 30 and reduce the cost while ensuring the structural strength of the packing assembly 100.

In some optional embodiments, a distance between the top surface of the enclosure 61 and the tray 1 is $d_1$, and a distance between the top cover 63 and the tray 1 is $d_2$, where di and $d_2$ meet the following requirements: $1/2d_2 \leq d_1 \leq d_2$. Therefore, when $d_1$ and $d_2$ meet the following requirements: $1/2d_2 \leq d_1 < d_2$, the top surface of the enclosure 61 is lower than the top surface of the photovoltaic module assembly 2, and the top surface of the enclosure 61 can be flush with the top surface of the reinforcing device 30. In this way, it can ensure that the enclosure 61 can protect the photovoltaic module 21. Further, the height of the enclosure 61 can be reduced, thus reducing the cost of the enclosure 61. When $d_1=d_2$, the top cover 63 is installed on the top of the enclosure 61. At this time, the top surface of the enclosure 61 is flush with the top surface of the photovoltaic module assembly 2. The top surface of the enclosure 61 is higher than the top surface of the reinforcing device 30. The enclosure 61 can surround the entire peripheral surface of the photovoltaic module 21. The enclosure 61, the top cover 63 and the tray 1 together surround the entire photovoltaic module 21. When the photovoltaic module 21 is transported at sea, the enclosure 61 can isolate the photovoltaic module 21 from water vapor, effectively preventing the photovoltaic module 21 from being damaged by water vapor.

In some optional embodiments, a buffer (not shown in the figures) is provided between the reinforcing device 30 and the photovoltaic module assembly 2. On one hand, the buffer can play a buffering role to prevent the photovoltaic module 21 from being damaged by external forces during transportation. On the other hand, the buffer can fill the gap between the reinforcing device 30 and the photovoltaic module assembly 2, so that the distance between the reinforcing device 30 and the buffer can be zero, and the distance between the buffer and the photovoltaic module assembly 2 can be zero, which can further improve the anti-tilting effect of the package assembly 100.

Optionally, the buffer part can be a packaging film, a foamed part or a foam part, but not limited to any of these examples.

Optionally, the tray 1 can be a wooden tray. For example, in the process of loading the photovoltaic module 21 into a container, if a distance between the top of the photovoltaic module 21 and the top of the container is large, the wooden tray 1 can be used. On one hand, the photovoltaic module 21 can be effectively loaded into the container. On the other hand, the wooden tray has a low cost, which can effectively reduce the cost of the entire packaging assembly 100.

Alternatively, the tray 1 can be a metal-wood mixed tray. At this time, the tray 1 can be made of metal and wood. For example, in the process of loading a photovoltaic module 21 into the container, if the distance between the top of the photovoltaic module 21 and the top of the container is small or the weight of the photovoltaic module 21 is heavy, the metal-wood mixed tray can be used as the tray 1. On one hand, the height of the metal-wood mixed tray can be set low, which can effectively load the the photovoltaic module 21 into the container. On the other hand, the metal-wood mixed tray can effectively ensure the structural strength of the packaging assembly 100, and prevent the photovoltaic module 21 from tilting and collapsing.

A container assembly (not shown in the figures) according to an embodiment of a second aspect of the present disclosure includes a container and a plurality of packaging assemblies 100. The packaging assembly 100 is the packaging assembly 100 according to the embodiment of the first aspect of this disclosure, and the plurality of packaging assemblies 100 are located in the container.

For example, the container can have a door height of 2580mm and a door width of 2342mm. Therefore, because the size of the container is fixed, the packaging assembly 100 can easily pass through the container door when the size of the photovoltaic module 21 is large (for example, the side length of the cell reaches 210 mm). Moreover, the lateral dimension of the photovoltaic module assembly 2 is relatively small, which can reduce the lateral space occupied by thte the photovoltaic module assembly 2 in the container during transportation, thus improving the loading rate. In addition, the packaging assembly 100 occupies less space in the direction perpendicular to the first sidewall, which can further improve the loading rate and reduce the transportation cost.

In the container assembly in the embodiment of the present disclosure, by using the packaging assembly 100, the packaging assembly 100 occupies less space, so that the container can accommodate more photovoltaic modules 21, which can effectively reduce the transportation cost of photovoltaic module 21.

In some embodiments of the present disclosure, the body 4211 of the first sub-bar 421 of each packaging assembly 100 is perpendicular to the length direction of the container. The two first sidewalls of the photovoltaic module assembly 2 can be perpendicular to the length direction of the container, and the two second sidewalls of the photovoltaic module assembly 2 can be perpendicular to the width direction of the container. Therefore, due to the large space margin in the width direction of the container, the space occupied by the first sub-bar 421 in the length direction of the container can be effectively reduced by making the body 4211 perpendicular to the length direction of the container, and the connecting part 4212 configured to be connected with the first reinforcing bar 41 can be located in the width direction of the container. In this way, the size of the packaging assembly 100 in the length direction of the container can be minimized, thereby effectively improving the loading rate of the photovoltaic module 21.

In the description of the present disclosure, it is necessary to understand that the orientation or position relationship indicated by the terms "length", "width", "thickness", "up", "down", "front", "back", "top", "bottom", "inside", "outside", etc. is based on the orientation or position relationship shown in the attached drawings, are only for the convenience of describing the present disclosure and simplifying the description, but do not to indicate or imply that the device or element referred to must have a specific orientation, or must be constructed and operated in a specific orientation. Therefore, these terms cannot be understood as a limitation of the present disclosure.

In the description of this application, it should be noted that unless otherwise specified and limited, the terms "installation", "connection" and "connecting" should be understood in a broad sense. For example, they can refer to a fixed connection, a detachable connection, or an integrated connection. They can refer to a mechanical connection or an electrical connection. They can rerfer to a direct connection, or an indirect connection through an intermediate media, or an internal communication between and within two components. For ordinary technical personnel in the art, the specific meaning of the above terms in the application can be understood in specific circumstances.

In the description of this specification, the description with reference to the terms "one embodiment", "some embodiments", "schematic embodiments", "examples", "specific examples", or "some examples" means that the specific features, structures, materials, or features described in combination with the embodiment or example are included in at least one embodiment or example of this disclosure. In this specification, the schematic expressions of the above terms do not necessarily refer to the same embodiment or example.

Although embodiments of the present disclosure have been shown and described, those skilled in the art can understand that these embodiments can be varied, modified, replaced and modified without departing from the principles and purposes of the present disclosure. The scope of the present disclosure is limited by the claims and their equivalents.

**Claims**

1. A packaging assembly, comprising:

   a tray; and
   a photovoltaic module assembly provided on the tray, wherein the photovoltaic module assembly comprises a plurality of photovoltaic modules, a long side of each of the plurality of photovoltaic modules is perpendicular to an upper surface of the tray, and a short side of each of the plurality of photovoltaic modules is parallel to the upper surface of the tray.

2. The packaging assembly according to claim 1, further comprising:
   a reinforcing device comprising two reinforcing structures which are respectively located on two opposite sides of the photovoltaic module assembly, and the reinforcing structure facing a side surface of each of the plurality of photovoltaic modules.

3. The packaging assembly according to claim 2, wherein each of the two reinforcing structures comprises:
   a first reinforcing structure comprising a first reinforcing bar, a second reinforcing bar and a third reinforcing bar, wherein the first reinforcing bar and the second reinforcing bar are respectively located at two adjacent edges of the photovoltaic module assembly, a lower end of the first reinforcing bar and a lower end of the second reinforcing bar are connected with the tray, an upper end surface of the first reinforcing bar is located below an upper end surface of the second reinforcing bar, the two first reinforcing bars and the two second reinforcing bars of the two reinforcing structures are respectively located at four edges of the photovoltaic module assembly, and the third reinforcing bar is obliquely connected between the first reinforcing bar and the second reinforcing bar.

4. The packaging assembly according to claim 3, wherein the third reinforcing bar is obliquely connected between an upper end of the first reinforcing bar and an upper end of the second reinforcing bar.

5. The packaging assembly according to claim 3 or 4, wherein a distance between the upper end surface of the first reinforcing bar and a top surface of the tray is $S_1$, a distance between the upper end surface of the second reinforcing bar and the top surface of the tray is $S_2$, and a distance between a top surface of the photovoltaic module assembly and the top surface of the tray is $S_3$, wherein $S_1$, $S_2$ and $S_3$ satisfy:

$$1/10 \leqslant S_1/S_3 \leqslant 1/3,$$

and/or

$$1/2 \leqslant S_2/S_3 \leqslant 2/3.$$

6. The packaging assembly according to any one of claims 2-5, wherein a distance between a top surface of each of the plurality of reinforcing structures and the top surface of the tray is $S_4$, and a distance between a top surface of the photovoltaic module assembly and the top surface of the tray is $S_3$, wherein $S_4$ and $S_3$ satisfy: $2/3 \leq S_4/S_3 \leq 1$.

7. The packaging assembly according to any one of claims 2-6, further comprising:
a packaging box comprising an enclosure, wherein the enclosure surrounds an outer peripheral side of the photovoltaic module assembly and covers at least a part of the photovoltaic module assembly in the height direction of the photovoltaic module assembly, and each of the plurality of reinforcing structures is provided on an outer peripheral side of the enclosure.

8. The packaging assembly according to claim 7, wherein the enclosure comprises a plurality of sidewalls that are sequentially connected in an end-to-end way along the outer peripheral side of the photovoltaic module assembly, at least one of the plurality of sidewalls is a first sidewall, the first sidewall has a first folding line dividing the first sidewall into a first sidewall part and a second sidewall part below the first sidewall part, the first sidewall part is foldable and/or tearable relative to the second sidewall part.

9. The packaging assembly according to claim 7 or 8, further comprising:

a bottom plate connected with a lower end of the enclosure and fixedly connected with the tray; and
a top cover arranged on a top of the photovoltaic module assembly, the top cover, the bottom plate and the enclosure jointly covering an outer surface of the photovoltaic module assembly.

10. The packaging assembly according to any one of claims 1-9, wherein an outer surface of the packaging assembly is surrounded by a plurality of first packaging belts, and the outer surface of the photovoltaic module assembly is surrounded by a plurality of second packaging belts.

11. The packaging assembly according to any one of claims 1-10, wherein two outermost photovoltaic modules in the photovoltaic module assembly are a first photovoltaic module and a second photovoltaic module, and a front surface of the first photovoltaic module and a front surface of the second photovoltaic module face each other.

12. The packaging assembly according to claim 1, wherein front surfaces of the plurality of photovoltaic modules are stacked in the same direction.

13. The packaging assembly according to claim 12, further comprising a reinforcing device provided on the tray, the reinforcing device being located on an outer peripheral side of the photovoltaic module assembly.

14. The packaging assembly according to claim 13, wherein the reinforcing device comprises:

four third reinforcing bars, wherein the four third reinforcing bars all extend along a vertical direction and are respectively located at four edges of the photovoltaic module assembly, and lower ends of the four third reinforcing bars are connected with the tray;
at least two fourth reinforcing bars, wherein each of the at least two fourth reinforcing bars is connected between upper ends of two adjacent third reinforcing bars, and at least two fourth reinforcing bars are located at a radially outer side of the photovoltaic module assembly; and
at least two fifth reinforcing bars, an upper end of each of the at least two fifth reinforcing bars is connected with the upper ends of the two adjacent third reinforcing bars, a lower end of each of the at least two fifth reinforcing bars is connected with the lower ends of the two adjacent third reinforcing bars, and the at least two fifth reinforcing bars are located at the radially outer side of the photovoltaic module assembly.

15. The packaging assembly according to any one of claims 12-14, wherein a length of the photovoltaic module is L and a width of the photovoltaic module is W, wherein L and W satisfy: $1.5 < L/W < 1.9$.

16. The packaging assembly according to any one of claims 12-15, wherein the tray is a rectangular tray, side edges of the photovoltaic module assembly are parallel to an edge of the tray, and a distance between at least one of the side edges of the photovoltaic module assembly and a corresponding edge of the tray is d, wherein the d satisfies: $5mm \leq d \leq 30mm$.

17. The packaging assembly according to claim 13 or 14, wherein a distance between the top surface of the reinforcing device and the tray is $d_1$, and a distance between the top surface of the photovoltaic module assembly and the tray is $d_2$, wherein $d_1$ and $d_2$ satisfy: $1/2d_2 \leq d_1 \leq 2/3d_2$.

18. The packaging assembly according to any one of claims 13-14 or 17, wherein further comprising:

an enclosure surrounding an outer peripheral side of the photovoltaic module assembly and covering at least a part of the photovoltaic module assembly in the height direction of the photovoltaic module assembly, and the enclosure is located between the photovoltaic module assembly and the reinforcing device;
a top cover arranged on a top of the photovoltaic module assembly.

19. The packaging assembly according to claim 1, wherein the photovoltaic module assembly is formed as a cuboid structure and comprises two first sidewalls and two second sidewalls, the two first sidewalls are opposite to each other, and the two second sidewalls are opposite to each other;

the packaging assembly further comprises a reinforcing device located on an outer peripheral side of the photovoltaic module assembly, the reinforcing device comprises four first reinforcing bars and a plurality of second reinforcing bars, the four first reinforcing bars are respectively located at four edges of the photovoltaic module assembly, and lower ends of the four first reinforcing bars are connected with the tray, the second reinforcing bar is connected between two adjacent first reinforcing bars, the plurality of the second reinforcing bars comprise at least one first sub-bar comprising a body and two connecting parts, the two connecting parts are respectively connected at both ends of the body, the body is located between the two adjacent first reinforcing bars and faces the first sidewall, and the two connecting parts respectively face the two second sidewalls, and the first sub-bar is connected with corresponding two first reinforcing bars through the two connecting parts.

20. The packaging assembly according to any one of claims 1-19, wherein a height of the packaging assembly is H, wherein the H satisfies: 2100mm≤H≤2520mm.

100

63

6

9

322

321

324

912

323

912

313

91

312

911

314

911

311

321

1

311

A

FIG. 1

A

311

13

13

13

13

FIG. 2

FIG. 3

100

63

10

321

912

912

91

911

911

311

321

1

3211

311

322
324
323

313

312

314

61

FIG. 4

FIG. 5

FIG. 6

FIG. 7

FIG. 8

FIG. 9

FIG. 10

FIG. 11

FIG. 12

FIG. 13

FIG. 14

FIG. 15

411

4211

4212

422

FIG. 16

411

4211

422

4212

FIG. 17

63

61a

61b

1

40

**FIG. 18**

100

63

2

61

30

432

431

3

45

44

1

431

11

**FIG. 19**

FIG. 20

FIG. 21

**INTERNATIONAL SEARCH REPORT**

International application No.

**PCT/CN2021/137862**

| A. | CLASSIFICATION OF SUBJECT MATTER |
|---|---|

B65D 19/44(2006.01)i;  B65D 19/38(2006.01)i;  B65D 6/24(2006.01)i;  B65D 85/00(2006.01)i;  B65D 90/00(2006.01)i

According to International Patent Classification (IPC) or to both national classification and IPC

| B. | FIELDS SEARCHED |
|---|---|

Minimum documentation searched (classification system followed by classification symbols)

B65D

Documentation searched other than minimum documentation to the extent that such documents are included in the fields searched

Electronic data base consulted during the international search (name of data base and, where practicable, search terms used)

CNABS; CNTXT; CNKI; VEN; USTXT; WOTXT; EPTXT: 阿特斯阳光, 太阳能, 光伏, 竖向, 倒置, 互补, 半, 护角, 角板, solar, vertical+, inversion, turnover, half, corner, protect+

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 214826046 U (SUZHOU CSI SOLAR POWER TECHNOLOGY CO., LTD. et al.) 23 November 2021 (2021-11-23) description, pages 1-9, figures 1-6 | 1, 10-20 |
| PX | CN 213949089 U (SUZHOU CSI SOLAR POWER TECHNOLOGY CO., LTD. et al.) 13 August 2021 (2021-08-13) description, pages 1-8, figures 1-6 | 1, 10-20 |
| PX | CN 214777344 U (ZHEJIANG JINKO SOLAR CO., LTD. et al.) 19 November 2021 (2021-11-19) description, pages 1-5, figures 1-5 | 1-20 |
| PX | CN 213736375 U (ZHANG, Yang) 20 July 2021 (2021-07-20) description, pages 1-4, figures 1-3 | 1-20 |
| PX | CN 214876717 U (FENGSHANG LVPIN ZERO-CARBON INTERNET OF THINGS TECHNOLOGY (QINGDAO) CO., LTD.) 26 November 2021 (2021-11-26) description, pages 1-3, figures 1-8 | 1-20 |
| PX | CN 112793891 A (FENGSHANG LVPIN ZERO-CARBON INTERNET OF THINGS TECHNOLOGY (QINGDAO) CO., LTD.) 14 May 2021 (2021-05-14) description, pages 1-3, and figures 1 and 2 | 1, 10-20 |

☑ Further documents are listed in the continuation of Box C.  ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **24 February 2022** | **09 March 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT

| International application No. |
| --- |
| **PCT/CN2021/137862** |

**C.    DOCUMENTS CONSIDERED TO BE RELEVANT**

| Category* | Citation of document, with indication, where appropriate, of the relevant passages | Relevant to claim No. |
| --- | --- | --- |
| E | CN 215514287 U (non-official translation: QINGJU INTERNET OF THINGS TECHNOLOGY (TAIZHOU) CO., LTD.)14 January 2022 (2022-01-14)<br>description, pages 1-3, figures 1-5 | 1-4, 7, 10 |
| X | CN 109573260 A (CNBM CHENGDU OPTOELECTRONIC MATERIALS CO., LTD.) 05 April 2019 (2019-04-05)<br>description, paragraphs [0028]-[0042], and figures 1-5 | 1, 10-13, 15-17, 20 |
| Y | CN 109573260 A (CNBM CHENGDU OPTOELECTRONIC MATERIALS CO., LTD.) 05 April 2019 (2019-04-05)<br>description, paragraphs [0028]-[0042], and figures 1-5 | 2-11, 14-20 |
| Y | CN 105775324 A (HAINAN YINGLI NEW ENERGY RESOURCES CO., LTD.) 20 July 2016 (2016-07-20)<br>description, paragraphs [0028]-[0045], and figures 3-6 | 2-11, 14-20 |
| Y | CN 210028571 U (CHE; Cui et al.) 07 February 2020 (2020-02-07)<br>description paragraphs [0012]-[0016], figures 1, 2 | 2-11, 20 |
| A | CN 208515976 U (SHANDONG FENGSHANG LVPIN PACKAGING TECHNOLOGY CO., LTD.) 19 February 2019 (2019-02-19)<br>entire document | 1-20 |
| A | AU 5298786 A (NEW ZEALAND DEV FINANCE) 06 August 1987 (1987-08-06)<br>entire document | 1-20 |

Form PCT/ISA/210 (second sheet) (January 2015)

EP 4 265 535 A1

**INTERNATIONAL SEARCH REPORT**
Information on patent family members

International application No.

**PCT/CN2021/137862**

| Patent document cited in search report | | | Publication date (day/month/year) | Patent family member(s) | | | Publication date (day/month/year) |
|---|---|---|---|---|---|---|---|
| CN | 214826046 | U | 23 November 2021 | None | | | |
| CN | 213949089 | U | 13 August 2021 | CN | 213949090 | U | 13 August 2021 |
| | | | | CN | 214876318 | U | 26 November 2021 |
| | | | | CN | 213949116 | U | 13 August 2021 |
| | | | | CN | 213949111 | U | 13 August 2021 |
| CN | 214777344 | U | 19 November 2021 | None | | | |
| CN | 213736375 | U | 20 July 2021 | None | | | |
| CN | 214876717 | U | 26 November 2021 | None | | | |
| CN | 112793891 | A | 14 May 2021 | CN | 214190557 | U | 14 September 2021 |
| CN | 215514287 | U | 14 January 2022 | None | | | |
| CN | 109573260 | A | 05 April 2019 | None | | | |
| CN | 105775324 | A | 20 July 2016 | None | | | |
| CN | 210028571 | U | 07 February 2020 | None | | | |
| CN | 208515976 | U | 19 February 2019 | None | | | |
| AU | 5298786 | A | 06 August 1987 | None | | | |

Form PCT/ISA/210 (patent family annex) (January 2015)

44